# EUROPEAN PATENT APPLICATION

(11) **EP 3 792 848 A1**
(43) Date of publication of application: **17.03.2021**
(21) Application number: 20191856.2
(22) Date of filing: 20.08.2020
(51) Int. Cl.: G06Q 10/04, G06Q 10/06

(54) **SYSTEMS AND METHODS FOR DEPLOYING A ROBOTIC SECURITY ESCORT TO ENHANCE ENTERPRISE SECURITY**

(30) Priority: 12.09.2019 US 201916569600
(71) Applicant: eBay, Inc., San Jose, CA 95125 (US)
(72) Inventor: RUBINSON, Ethan Benjamin, San Jose, California 95125 (US); TULI, Vikram, San Jose, California 95120 (US); JOHNSSON, Leslie Linnea, San Jose, California 95125 (US); WANG, Qiaosong, San Jose, California 95125 (US); MAZID, A. Rami, San Jose, California 95125 (US)
(74) Representative: Müller-Boré & Partner Patentanwälte PartG mbB

(57) **Abstract**

Enhancing enterprise security by deploying a robotic security escort to guide a guest along a route that is tailored to the guest to ensure that the guest does not pass through restricted areas which the guest is not authorized to access. The guest may be assigned a security authorization level that defines whether the guest is permitted to access one or more predefined areas of the enterprise facility. A destination location to which the guest is to be escorted may be identified. Based on the security authorization level assigned to the guest, the system determines an appropriate route for escorting the guest throughout the enterprise facility to the destination location. The system may then deploy the robotic security escort to physically escort the guest along the appropriate route obtain adequate security with respect to sensitive enterprise resources while the guest is visiting the enterprise facility.

## Description

### BACKGROUND

When hosting guests at enterprise facilities, enterprises are challenged with ensuring that adequate security levels are maintained with respect to sensitive enterprise resources. This is partly because an enterprise may regularly host large numbers of guests that have different types of relationships with the enterprise. One important goal of a typical enterprise is to ensure that guests whom are visiting an enterprise facility are provided with an appropriate level of access to sensitive enterprise resources based on their relationship with that enterprise. For example, a close business partner of an enterprise may be visiting the enterprise facility for the purpose of assisting the enterprise with proprietary research. As such, this close business partner may be specifically authorized to access certain sensitive enterprise resources such as, for example, research laboratories. In contrast, a prospective employee may be visiting the enterprise facility for the purpose of interviewing for an entry-level position with the enterprise. As such, this prospective employee may be restricted from accessing any sensitive enterprise resources.

Unfortunately, maintaining adequate security levels when hosting a guest typically relies on numerous employees coordinating with one another to understand which sensitive enterprise resources (if any) the guest is permitted to access. These employees then physically escort the guest throughout the enterprise facility. All too often, employees whom are serving to escort the guest fail to enforce adequate security levels. As a specific example, an escorting employee may decide to take a shortest known path when escorting a guest to a conference room, and this shortest known path may pass through a sensitive area of the enterprise facility such as a research laboratory that the guest is not permitted to access. As another example, at the conclusion of a meeting with the guest, an escorting employee may permit the guest to see themselves out - the result being that the guest is free to wonder throughout the enterprise facility without supervision.

It is with respect to these and other considerations that the following disclosure is made.

### SUMMARY

This disclosure provides techniques that enhance enterprise security by deploying a robotic security escort to escort a guest that is visiting an enterprise facility. Generally described, a security authorization level may be assigned to the guest in association with the enterprise facility. The security authorization level may be assigned to the guest with respect to the enterprise facility as a whole or even more granularly assigned with respect to one or more specific sensitive enterprise resources at the enterprise facility. For example, the guest may be assigned a security authorization level that permits access to a single research laboratory out of numerous research laboratories within the enterprise facility. With respect to escorting the guest during the visit, a determination may be made as to a destination location to which the guest is to be escorted within the enterprise facility. Then, based on the security authorization level assigned to the guest, a route may be determined that is suitable for escorting the guest throughout the enterprise facility to the destination location in a manner that maintains adequate security levels.

As a specific example, a guest may arrive at a reception area at one end of the enterprise facility to check-in for a meeting that is scheduled to take place in a conference room on an opposite end of the enterprise facility. Furthermore, the guest may be assigned a security authorization level that restricts access to a research laboratory that is located in the middle of the enterprise facility directly between the reception area and the conference room. In such an example, a robotic security escort may be deployed to escort the guest from the reception area to the conference room along a route that is specifically selected to avoid the research laboratory. In contrast, suppose that the guest were instead assigned a different security authorization level that permits access to the research laboratory. Under these alternate circumstances, the robotic security escort may instead be deployed to escort the guest from the reception area to the conference room along an alternate route that passes through the research laboratory. In this way, the robotic security escort may physically escort the guest throughout the enterprise facility along routes that are specifically selected to maintain adequate security levels with respect to sensitive enterprise resources.

The disclosed techniques improve security with respect to sensitive enterprise resources when an enterprise is hosting guests throughout an enterprise facility. In one respect, the disclosed techniques reduce (or even eliminate) an enterprise's reliance on various employees taking the initiative to learn which sensitive resources a guest is permitted to access during the guest's visit. For example, a business partner of the enterprise may be assigned a security authorization level that permits access to a first enterprise resource but restricts access to a second enterprise resource. This security authorization level may be saved in an enterprise database so that each time the business partner returns to the enterprise facility, a robotic security escort may be deployed to escort the business partner in a manner that allows the business partner to access the first enterprise resource as desired while restricting the business partner from accessing the second enterprise resource. In this way, even if a receptionist at the enterprise facility performs some initial check-in procedure(s) when the business partner first arrives (e.g., checking the business partner's identification, politely asking whether the business partner would like refreshments, etc.), this receptionist needn't have any knowledge whatsoever of the security authorization level assigned to the business partner by the enterprise in order for adequate security to be maintained during the guest's visit.

Furthermore, as described in more detail below, various implementations of the techniques disclosed herein may eliminate the need for various employees such as the receptionist to perform various check-in procedures when the guest first arrives at the enterprise facility. For example, the robotic security escort may be configured with an ability to deploy one or more biometric sensors to confirm an identity of an arriving guest (e.g., facial recognition, fingerprint scan, iris-recognition, etc.). Then, based on the biometrically confirmed identity of the guest, the robotic security escort may be caused to adhere to routes within the enterprise facility that are appropriate for a security access level that is assigned to the guest with respect to the enterprise facility. In this way, security measures can be rigidly enforced while a guest is visiting an enterprise facility notwithstanding actual employees of the enterprise lacking specific knowledge of the security authorization level assigned to the guest by the enterprise. Technical benefits other than those specifically identified herein might also be realized through implementations of the disclosed technologies.

In an illustrative implementation, a system receives confirmation data indicating that a guest has arrived at a check-in location of an enterprise facility. As a specific but nonlimiting example, the robotic security escort may be stationed within a reception area of the enterprise facility and may be configured to serve as a check-in terminal upon the guest's arrival to the reception area. The confirmation data indicating that the guest has arrived may be generated based on the guest interacting with the check-in terminal upon arriving at the reception area of the enterprise facility. As described below, in some implementations the robotic security escort may serve as the check-in terminal. The confirmation data may include various types of information that are pertinent to the guest's visit to the enterprise facility. In some embodiments, the confirmation data may indicate both an identity of the guest and an identity of a specific employee of the enterprise that is sponsoring the guest's visit. For example, when checking in via the check-in terminal, the guest may be prompted to provide first identifying information to identify oneself (e.g., a photo ID such as a driver's license or passport) and second identifying information to identify the specific employee(s) which the guest is scheduled to visit (e.g., an enterprise email address of the employees).

In the illustrative implementation, the system further receives destination data that indicates a destination location within the enterprise facility to which the guest is to be escorted by the robotic security escort. As an example, after the guest has checked-in and identified the specific employee that is sponsoring the guest's visit, the system may obtain calendar data that corresponds to the specific employee to identify a conference room that has been reserved for an upcoming meeting which both the guest and the specific employee are scheduled to attend. As another example, while checking in to the enterprise facility, the guest may be prompted to indicate a particular destination location of the enterprise facility at which the guest intends to meet the specific employee (e.g., the guest may simply indicate an intention to meet in the specific employee's office).

In addition to receiving confirmation data indicating that the guest has arrived at the enterprise facility and the destination data indicating the destination location within the enterprise facility to which the guest is to be escorted, the system also determines a security authorization level that is assigned to the guest in association with the enterprise facility. In some embodiments, the security authorization level may be assigned to the guest with respect to the enterprise facility as a whole. For example, the enterprise facility may be comprised of multiple predefined areas (e.g., conference rooms, cafeterias, research laboratories, etc.) that are individually assigned security access levels based on some predefined security access level scale (e.g., a scale from null to 5 - null meaning no security level is required and 5 meaning the highest security level is required). In such an example, if the security authorization level that is assigned to the guest reaches or exceeds the security access level that is assigned to a particular area, it may then be determined that the guest is permitted to access (e.g., reside in, pass through, etc.) the particular area. Additionally, or alternatively, the security authorization level may be assigned to the guest with respect to one or more individual enterprise resources at the enterprise facility. For example, the guest may be assigned a security authorization level that permits access only to a single research laboratory out of numerous research laboratories present at the enterprise facility.

Then, based on the security authorization level that is assigned to the guest, the system determines a route that is suitable for maintaining adequate security while escorting the guest from the check-in location to the destination location. For example, under circumstances in which the security authorization level assigned to the guest restricts access to a research laboratory that is located between the check-in location and the destination location, a route may be determined for escorting the guest to the destination location without passing through the research laboratory - even if the shortest or most convenient path to the destination location does require passing through the research laboratory. In contrast, if the guest's security authorization level instead permitted access to the research laboratory, then an alternate route may be determined for escorting the guest to the destination location - the alternate route being shorter due to passing through the research laboratory.

Ultimately, once the route has been determined, the system causes the robotic security escort to travel along the route in order to escort the guest from the check-in location to the destination location. For example, in an implementation in which the robotic security escort is a "humanoid" type robot, the robotic security escort may be caused to walk alongside the guest while providing verbal and/or visual instructions to the guest regarding the route. The robotic security escort may also monitor a physical location of the guest with respect to the route and respond to the guest deviating from the route by performing various security measures. For example, if the guest approaches a research laboratory that he or she is restricted from accessing, the robotic security escort may instruct the guest to return to the route, cause a door to the research laboratory to become locked, etc. Thus, the techniques described herein relate to enabling the robotic security escort to physically escort the guest throughout the enterprise facility along routes that are specifically selected so as to maintain adequate security levels respect to sensitive enterprise resources - thereby eliminating the need for enterprise employees to supervise the guest during his or her visit to the enterprise facility. Implementation of the disclosed techniques greatly improve the degree to which sensitive enterprise resources are protected while a guest is visiting an enterprise facility.

This Summary is provided to introduce a selection of concepts in a simplified form that are further described below in the Detailed Description. This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items.
FIG. 1 illustrates an exemplary system for enhancing enterprise security by deploying a robotic security escort to escort a guest throughout an enterprise facility along a route that is specifically selected based on a security authorization level of the guest.
FIG. 2A illustrates an exemplary route along which a robotic security escort may guide a guest through a particular area of an enterprise facility based on a security authorization level of the guest reaching (or exceeding) a security access level of the particular area of the enterprise facility.
FIG. 2B illustrates an alternate route along which the robotic security escort may guide the guest to avoid passing through the particular area of the enterprise facility based on a security authorization level of the guest being below (not reaching) a security access level of the particular area of the enterprise facility.
FIG. 2C illustrates yet another alternate route along which the robotic security escort may guide the guest to a destination location after having intercepted the guest at or near the enterprise facility at a location other than a reception area or designated check-in location.
FIG. 2D illustrates a scenario in which the robotic security escort guides the guest to an alternate destination location in response to the guest being restricted from accessing a requested destination location.
FIG. 2E illustrates a scenario in which the robotic security escort guides the guest along a route that is specifically selected so as to pass through a location-of-interest on the way toward a destination location.
FIG. 3 illustrates an exemplary environment in which multiple robotic security escorts are deployed in unison to escort a guest during a visit to an enterprise facility.
FIG. 4A illustrates an exemplary robotic security escort that can be deployed to implement various techniques described herein.
FIG. 4B illustrates the exemplary robotic security escort of FIG. 4A while being deployed to enable the guest to accept terms of a non-disclosure agreement in association with a visit to an enterprise facility.
FIG. 5A illustrate an exemplary enterprise facility that is configured with one or more sensors to track a physical location of the guest and to generate one or more signals to guide the guest to a destination location.
FIG. 5B illustrates a scenario in which the exemplary enterprise facility has initiated one or more security measures in response to the physical location of the guest deviating from the route that has been selected based on the security authorization level of the guest.
FIG. 6A illustrates an exemplary notification graphical user interface (GUI) that can be presented on a computing device to inform an enterprise employee that a guest has arrived for a scheduled visit.
FIG. 6B illustrates another exemplary notification GUI that can be presented on a computing device to inform enterprise employee that a guest has arrived and has requested an impromptu (e.g., unscheduled) visit.
FIG. 7 illustrates an example process that may be performed by the robotic security escort service to determine alternate routes for escorting a guest throughout the enterprise facility based on security authorization data associated with the guest.
FIG. 8 shows additional details of an example computer architecture for a computer capable of executing the functionalities described herein such as, for example, those described with reference to the robotic security escort service, or any program components thereof as described herein.

### DETAILED DESCRIPTION

The following Detailed Description describes technologies for enhancing enterprise security by deploying a robotic security escort to guide a guest during a visit to an enterprise facility. An exemplary benefit of deploying a robotic security escort to guide the guest is that routes may be specifically tailored to the guest to ensure that the guest arrives at destination locations at appropriate times and without passing through restricted areas which the guest is not authorized to access. In this respect, the guest may be assigned a security authorization level in association with the enterprise facility. For example, the guest may be assigned a security authorization level that permits the guest to access one or more predefined research laboratories within the enterprise facility. Moreover, a destination location to which the guest is to be escorted may be identified. For example, a system may identify a calendar object that includes both a designation of a particular conference room as a meeting location and also includes an indication of a meeting acceptance having been received from the guest's email address. Under these circumstances, the system may determine based on the calendar object that the particular conference room is the destination location to escort the guest. Then, based on the security authorization level assigned to the guest, the system determines an appropriate route for escorting the guest throughout the enterprise facility to the destination location - the route being appropriate in the sense of maintaining adequate security levels with respect to sensitive enterprise resources.

For illustrative purposes, suppose that a guest checks-in at a reception area at one end of the enterprise facility and is scheduled to attend a meeting in a conference room on an opposite end of the enterprise facility. Further suppose that the most convenient route from the reception area to walk to the conference room includes passing through a research laboratory located in the middle of the enterprise facility. Under these circumstances, if the guest has been assigned a security authorization level that permits the guest to access the research laboratory, then the robotic security escort may be deployed to escort the guest through the research laboratory on the way to the conference room. Alternatively, if the guest has been assigned a lower security authorization level that restricts the guest from accessing the research laboratory, then the robotic security escort may be deployed to escort the guest to the conference room along an alternate route that is longer (or otherwise less convenient) but that avoids the research laboratory. In this way, the robotic security escort may physically escort the guest throughout the enterprise facility along routes that are specifically selected to maintain adequate security levels with respect to sensitive enterprise resources.

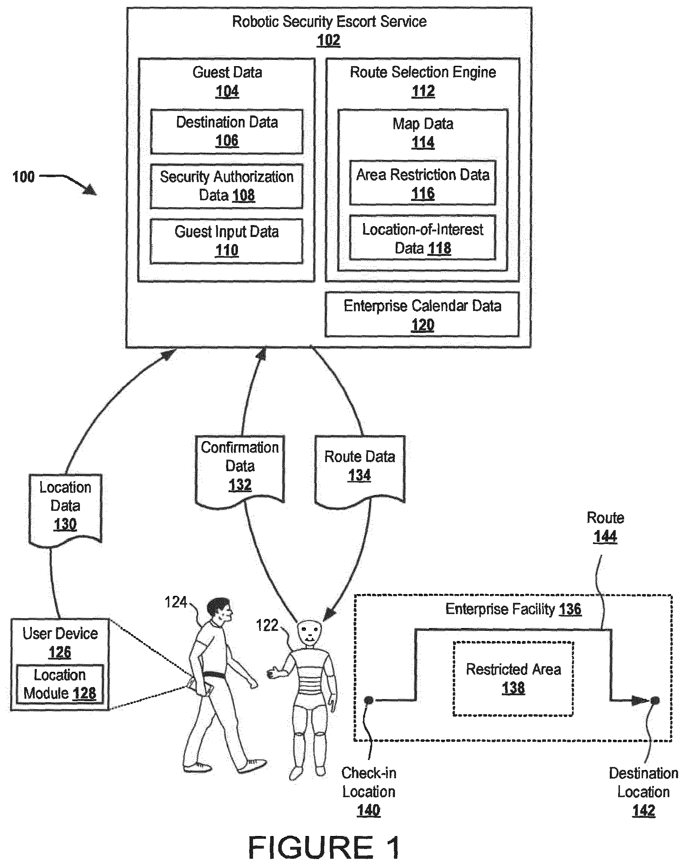

Turning now to FIG. 1, illustrated is an exemplary system 100 for enhancing enterprise security by deploying a robotic security escort 122 to escort a guest 124 throughout an enterprise facility 136 along a route 144 that is specifically selected based on a security authorization level of the guest 124. The specific scenario that is illustrated in FIG. 1 corresponds to the robotic security escort 122 guiding the guest 124 from a check-in location 140 to a destination location 142 along a route 144 that is specifically designed to avoid a restricted area 138, within the enterprise facility 136, which the guest 124 is not permitted to access. This specific scenario is illustrated for exemplary purposes only due to being suitable to adequately convey various concepts of the technologies described herein. This specific scenario is not intended to be limiting and it should be immediately apparent from both of the foregoing and the following discussion that many other scenarios are within the scope of the present disclosure.

As illustrated, the system 100 includes a robotic security escort service 102 that is configured to operate a route selection engine 112 to generate route data 134 for controlling the robotic security escort 122. Although illustrated as an external service that communicates with the robotic security escort 102 via data transmissions, the robotic security escort service 102 may in various embodiments be an integral component of the robotic security escort 122. For example, the robotic security escort service 102 may operate remotely on one or more servers to generate the route data 134 remotely from the robotic security escort 122 prior to providing the route data 134 to the robotic security escort 122. Additionally, or alternatively, the robotic security escort service 102 may operate locally on one or more computing units installed within the robotic security escort 122.

In the illustrated embodiment, the robotic security escort service 102 stores (or otherwise has access to) guest data 104 that uniquely corresponds to the guest 124. The guest data 104 may include one or more of destination data 106 indicating the destination location 142 to which the guest 124 is to be escorted, security authorization data 108 that indicates one or more security authorization levels that are assigned to the guest 124, and guest input data 110 indicating various types of information that have been provided by the guest 124.

In some embodiments, the destination data 106 may be generated based on the guest 124 being prompted to identify the destination location 142 during one or more check-in procedures that the guest 124 undergoes upon arriving at the enterprise facility 136. For example, the guest 124 may utilize a check-in terminal upon arrival at a reception area of the enterprise facility 136. Using the check-in terminal, the guest 124 may provide various types of information that are pertinent to the guest 124 visiting the enterprise facility 136 - including precisely where within the enterprise facility 136 the guest 124 intends to meet with one or more employees (e.g., the destination location 142). As another example, the robotic security escort 122 may be deployed to greet the guest 124 upon his or her arrival at the enterprise facility 136. While greeting the guest 124, the robotic security escort 122 may ask of the guest 124 a set of questions - some of which may be designed to garner information that is usable to determine the destination location 142. As a specific but nonlimiting example, the robotic security escort 122 may be programmed to greet the guest 124 by verbally asking "Hello, welcome to our facility. Who will you be meeting today and where will this meeting be taking place?" Then, the robotic security escort service 102 may analyze a response that is provided by the guest 124 to determine the destination location 142.

Additionally, or alternatively, the destination data 106 may be generated based on an analysis of enterprise calendar data 120 which the robotic security escort service 102 may also store (or otherwise have access to). For example, while checking-in at the enterprise facility 136, the guest 124 may be prompted to provide one or more items of identifying information such as, for example, a full name and/or a business email address. Then, based on this identifying information, the robotic security escort service 102 may analyze the enterprise calendar data 120 to identify a particular calendar event that is associated with the identifying information of the guest 124. In some instances, analyzing the enterprise calendar data 120 may reveal a particular calendar in association with which a meeting acceptance has been received via the business email address provided by the guest 124. As a specific example, if the guest 124 indicates that her email address is "sally@businessname.com" when she checks in, the robotic security escort service 102 may parse through the enterprise calendar data 120 to identify a specific meeting that is both upcoming (e.g., is scheduled to occur in less than one hour, less than 45 minutes, less than 30 minutes, etc.) and for which a meeting acceptance has been received from "sally@businessname.com." In this example, robotic security escort service 102 may then further identify a particular conference room that has been reserved in association with the specific meeting and may designate the particular conference room as the destination location 142. In some implementations, upon determining the destination location 142 via analysis of the calendar data 120, the robotic security escort service 102 may prompt the guest 124 to confirm the accuracy of the determined destination location 142.

In some embodiments, the security authorization data 108 may define a security authorization level that has been assigned to the guest 124 in association with the enterprise facility 136 as a whole. For example, the enterprise facility 136 may include a plurality of predefined areas such as, for example, various office complexes, research laboratories, cafeterias, restrooms, printing facilities, and so on. Individual ones of these predefined areas may be designated with individual security access levels. For example, a cafeteria that is open to the general public (e.g., regardless of security authorization level - if any) be designated with a security access level of zero or "null" meaning that all persons are welcome to access the cafeteria. In contrast, a plurality of research laboratories for which access is restricted to at least some degree may each be designated with a security access level of five meaning that only persons having a security authorization level that meets or exceeds the security access level of five are permitted to access the research laboratory. Under these circumstances, if the security authorization data 108 defines a security authorization level of five or greater for the guest 124, then the robotic security escort 122 may be deployed to guide the guest 124 to various destination locations 142 along routes that pass through one or more of the plurality of research laboratories. In contrast, if the security authorization data 108 defines a security authorization level of four of less for the guest 124, then the robotic security escort 122 may be deployed to guide the guest 124 to various destination locations 142 along routes that avoid each of the plurality of research laboratories.

Additionally, or alternatively, the security authorization data 108 may define one or more individual security authorization levels that are area specific in the sense of having been assigned to the guest 124 in association with one or more individual predefined areas of the enterprise facility 136. For example, the enterprise facility 136 may include a first research laboratory and a second research laboratory and access each of these research laboratories may be restricted from public access. Furthermore, the security authorization data 108 associated with the guest 124 may define security authorization levels that indicate that the guest is permitted to access the first research laboratory but which do not specifically indicate whether the guest 124 is permitted or restricted from accessing the second research laboratory. Under these circumstances, the robotic security escort 122 may be deployed to guide the guest 124 to various destination locations 142 along routes that pass through the first research laboratory, but which all avoid the second laboratory. Stated plainly, the security authorization data 108 may define individual security authorization levels to the guest 124 on a highly granular level with respect to specific areas within the enterprise facility 136.

In some embodiments, the guest input data 110 may define various types of information that are provided to the robotic security escort service 102 by the guest 124 and which are pertinent to the guest's 124 visit to the enterprise facility 136. For example, the guest input data 110 may include an indication of one or more employees of the enterprise which the guest 124 is not scheduled to meet with but with whom the guest 124 would like to meet (if possible) during his or her visit. Based on such guest input data 110, the robotic security escort service 102 may be configured to send a message to the one or more employees to inform them that the guest 124 is or will be present at the enterprise facility 136 and that the guest 124 would like to see them if possible. Then, if the one or more employees agrees to see the guest 124 then the robotic security escort service 102 may modify a generated route so as to facilitate such meetings. As another example, the guest input data 110 may include an indication of one or more special accommodations that the guest 124 is requesting during his or her visit to the enterprise facility 136. Special accommodations may include, for example, informing the robotic escort service 102 that the guest 124 prefers to (or is required to) use elevators as opposed to stairs - or vice versa.

As illustrated, the route selection engine 112 stores or otherwise has access to map data 114 that defines a map or layout of the enterprise facility 136. For example, the map data 114 may define the locations of hallways, restrooms, stairways, elevators, research laboratories, cafeterias, and any other physical features of the enterprise facility 136. The map data 114 may further define area restriction data 116 that indicates one or more security access levels that are assigned to various predefined areas of the enterprise facility 136. As a specific example, the area restriction data 116 may define a security access level of five with respect to the restricted area 138. In this specific example, the area restriction data 116 may inform the robotic escort service 102 that only persons with a security authorization level of five or greater are permitted to access the restricted area 138.

In some embodiments, the map data 114 may further include location-of-interest data 118 that defines one or more locations-of-interest at the enterprise facility 136. For example, the location-of-interest data 118 may define physical locations and priorities levels in association with various predefined areas of the enterprise facility 136 so that the generation and/or selection of the route 144 by the route selection engine 112 can be biased - to at least some degree - to pass through the predefined areas. For example, suppose that the robotic security escort service 102 identifies two different routes from the check-in location 140 to the destination location 142 and each of these two different routes maintain adequate security levels but only one of these two different routes pass through an architecturally famous and aesthetically pleasing courtyard (e.g., a location-of-interest) whereas the other route passes through a loading dock area that is industrial looking. Under these exemplary circumstances, the route selection engine 112 may be biased based on the location-of-interest data 118 to select the first route that passes through the architecturally famous and aesthetically pleasing courtyard as opposed to the second route that passes through the industrial looking loading dock area.

With respect to the data flow scenario illustrated in FIG. 1, the robotic security escort service 102 is shown to receive confirmation data 132 indicating that the guest 124 has arrived at a check-in location 140 of the enterprise facility 136. In some instances, the robotic security escort 122 may be stationed at the check-in location 140 (e.g., within a reception area) for the purpose of greeting arriving guests. Furthermore, the robotic security escort 122 may serve as a check-in terminal for generating the confirmation data 132 upon the guest 124 arriving at the check-in location 140. The confirmation data 132 may include various types of information that are pertinent to the guest's 124 visit to the enterprise facility 136. For example, the confirmation data 132 may indicate an identity of the guest 124 as well as an identity of a specific employee of enterprise that is sponsoring the guest's visit. In some implementations, the robotic security escort 122 may be programmed to request identifying information from the guest 124 such as for example a photo ID. Additionally, or alternatively, the robotic security escort 122 may be configured with an ability to deploy a biometric sensor to confirm an identity of the guest 124. For example, the robotic security escort 122 may perform facial recognition techniques, fingerprint scanning techniques, iris recognition techniques, or any other type of biometric identification technique. Then, based on the by a biometrically confirmed identity of the guest 124, the robotic security escort 122 may be caused to adhere to routes 144 within the enterprise facility 136 that are appropriate for a security access level that is assigned to the guest 124 with respect to the enterprise facility 136.

In some embodiments, the robotic security escort service 102 may receive location data 130 associated with the guest 124 in order to timely deploy the robotic security escort 122 to greet the guest 124. For example, the guest 124 may be carrying a user device 126 (e.g., a smart phone, tablet computer, etc.) while traveling to and/or upon arriving at the enterprise facility 136. As illustrated, the user device 126 may include a location module 128 such as a GPS locator or other location tracking device. The location module 128 may continually and/or periodically generate instances of location data 130 and may transmit the location data 130 to the robotic security escort service 102 when the guest 124 becomes within a threshold distance from the enterprise facility 136. In some embodiments, at the time of accepting an invitation for a meeting that is to take place at the enterprise facility 136, the guest 124 may provide the robotic security escort service 102 with permission to obtain the location data 130 within some threshold time period prior to the meeting. For example, the guest 124 may provide permission to obtain the location data 130 within a one-hour window prior to the meeting.

In some embodiments, the permission to obtain the location data 130 may further be limited based on the current location of the guest 124 such that the location data 130 may only be obtained by the robotic security escort service 102 if the guest 124 within a threshold distance from the enterprise facility 136. In this way, once the guest 124 has accepted the invitation to the meeting, then the user device 126 may be instructed to transmit the location data 130 to the robotic security escort service 102 under the conditions that: (i) the current time is within a threshold time (e.g., 1 hour, 30 minutes, etc.) from the beginning of the meeting, and (ii) the current location of the guest 124 is within a threshold distance (e.g., 1 mile, 100 yards, etc.) from the enterprise facility 136.

A benefit of implementations in which location data 130 is provided to the robotic security escort service 102 is that the robotic security escort 122 may be deployed to accurately approach and greet the guest 124 even if the guest 124 arrives at the enterprise facility 136 at an area other than a traditional reception area. For example, the guest 124 may be unfamiliar with the enterprise facility 136 and may attempt to enter the enterprise facility 136 via one or more locations that are not open to the public. Under these circumstances the robotic security escort 122 may greet the guest 124 wherever he or she may be and whenever he or she may arrive. Then, the robotic security escort 122 may guide the guest 124 along an appropriate route 144 to his or her destination location 142.

Upon receipt of the confirmation data 132 indicating that the guest has arrived, the robotic security escort service 102 may retrieve the destination data 106 that indicates the destination location 142 to which the guest 124 is to be escorted by the robotic security escort 122. In one example, subsequent to the guest 124 having identified oneself (e.g. by providing an email address along with a photo ID), the robotic security escort service 102 may analyze the enterprise calendar data 120 to identify a meeting for which the guest 124 has accepted an invitation. Then, the robotic security escort service 102 may determine or otherwise infer that a specific conference room that has been reserved in association with the meeting is the most probable destination location 142 of the guest 124.

In addition to receiving the confirmation data 132 and to the destination data 106, the robotic security escort service 102 further obtains the security authorization data 108 that is associated with the guest 124. For purposes of the discussion of FIG. 1, presume that the security authorization data 108 defines a security authorization level in association with the guest 124 that restricts the guest 124 from accessing the restricted area 138 that is illustrated within the enterprise facility 136.

Based on the destination data 106 and the security authorization data 108, the robotic security escort service 102 may generate route data 134 that defines the route 144 along which the robotic security escort 122 is to travel while escorting the guest 124 from the check-in location 140 to the destination location 142. As further illustrated, the route data 134 is then provided to the robotic security escort to cause the robotic security escort 122 to travel along the route 144 in order to escort the guest from the check-in location 140 to the destination location 142. In the scenario illustrated in FIG. 1, the robotic security escort 122 is a "humanoid" type robot that may walk alongside the guest while providing verbal and/or visual instructions to the guest regarding the route 144. Thus, the techniques described herein relate to enabling robotic security escort 122 to physically escort the guest 124 throughout the enterprise facility along routes that are specifically selected so as to maintain adequate security levels respect to sensitive enterprise resources - thereby eliminating the need for enterprise employees to supervise the guest during his or her visit to the enterprise facility.

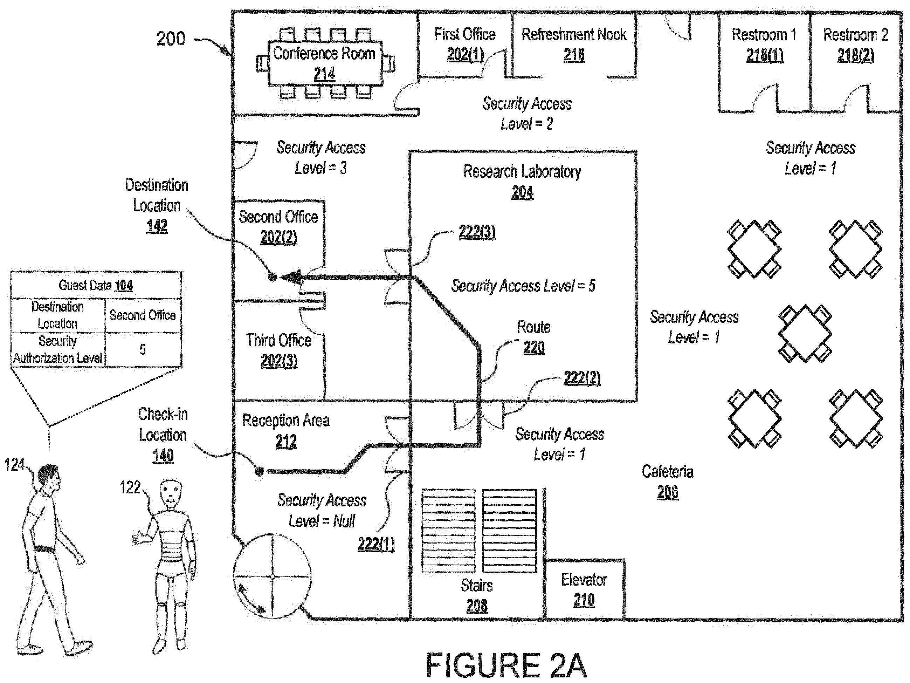

FIGS. 2A through 2E illustrate various exemplary routes along which the robotic security escort 122 may be deployed to escort the guest 124 from a first location within an enterprise facility 200 to a second location within the enterprise facility 200. As illustrated, the enterprise facility 200 includes multiple predefined areas which include a plurality of offices 202, a research laboratory 204, a cafeteria 206, stairs 208, an elevator 210, a reception area 212, a conference room 214, a refreshment nook 216, and a plurality of bathrooms 218. As described in detail below, the exemplary routes may be selected and/or generated based on a variety of factors which may include, but are not limited to, a security authorization level of the guest 124, a security access level of various predefined areas of the enterprise facility 200, location data 130 indicating a real-time location of a user device 126 associated with the guest 124, location-of-interest to data 118 that defines one or more locations-of-interest at the enterprise facility 200, and/or guest input data 110 provided by the guest 124 during or prior to the guest's visit to the enterprise facility 200. The various exemplary routes that are illustrated in FIGS. 2A though 2E are provided for illustrative purposes only and are not to be construed as limiting of the concepts disclosed herein.

Turning now to FIG. 2A, illustrated is an exemplary route 220 along which the robotic security escort 122 may guide the guest 124 through a particular area of an enterprise facility 200 based on a security authorization level of the guest 124 reaching (or exceeding) a security access level of the particular area of the enterprise facility 200. For purposes of FIG. 2A, the particular area is the research laboratory 204 having a security access level of five. As shown in FIG. 2A, the guest 124 arrives at a check-in location 140 within the reception area 212 of the enterprise facility 200. As further shown in FIG. 2A, the guest data 104 indicates that the destination location 142 to which the guest 124 is to be escorted is a second office 202(2) and that the security authorization level assigned to the guest 124 is five.

Based on the security authorization level assigned to the guest 124, the robotic security escort service 102 (described with relation to FIG. 1) may be deployed to determine the exemplary route 220 along which to escort the guest 124 to the second office 202(2) while maintaining adequate security levels with respect to sensitive enterprise resources. In the specifically illustrated but nonlimiting example, the most direct route to travel from the check-in location 140 the second office 202(2) is to walk from the reception area 212 into the cafeteria 206 before turning left into the research laboratory 204 and then immediately exiting the research laboratory 204 and walking straight into the second office 202(2). Also, the security authorization level that is assigned to the guest 124 specifically permits the guest 124 to access each of the predefined areas this most direct route passes. More specifically, the reception area 212 has a security access level of "null" such that the general public is permitted to walk directly into reception area 212, the cafeteria 206 has a security access level of "1" such that any persons whom check-in at the reception area 212 are permitted pass into the cafeteria 206. Furthermore, the research laboratory 204 has a security access level of "5" such that only persons having a security authorization level of "5" or greater may pass through research laboratory 204.

In the illustrated example, the robotic security escort service 102 determines that the security authorization level assigned to the guest 124 permits the guest 124 to access each predefined area of the enterprise facility 200 through which the most direct route from the check-in location 140 the destination location 142 passes. Based on this determination, the robotic security escort service 102 then selects this most direct route as the route 220 along which the robotic security escort 122 is to physically escort the guest 124 to the destination location 142. Ultimately, the robotic security escort service 102 provides route data 134 to the robotic security escort 122 to cause the robotic security escort 122 to physically escort the guest 124 from the reception area 212 through a first set of doors 222(1) into the cafeteria 206, a second set of doors 222(2) into the research laboratory 204, and finally through a third set of doors 222(3) into the second office 202(2).

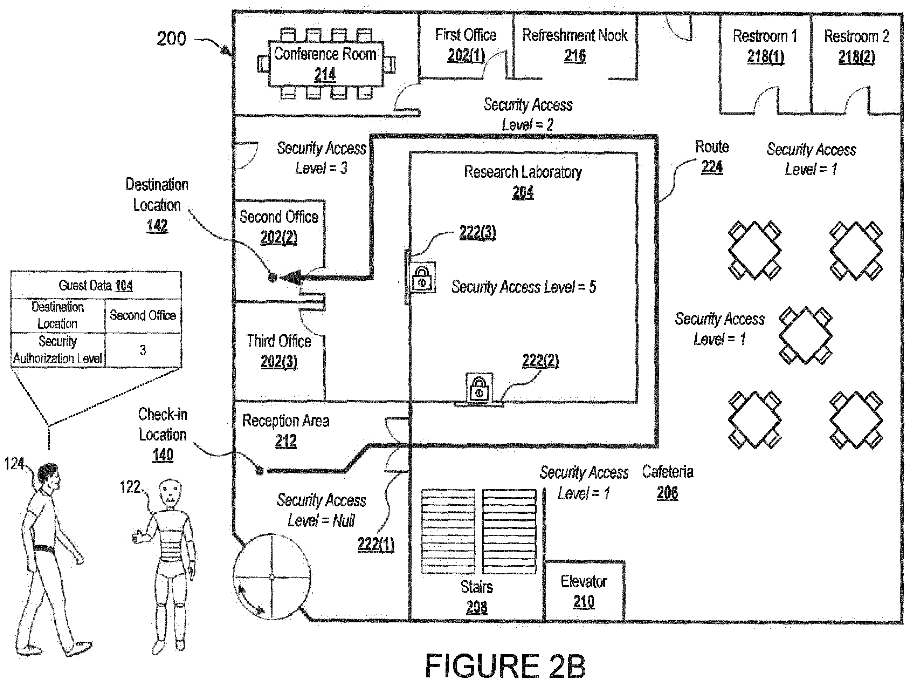

Turning now to FIG. 2B, illustrated is an alternate route 224 along which the robotic security escort 122 may guide the guest 124 so as to avoid passing through the particular area based on a security authorization level of the guest 124 being below (not reaching) a security access level of the particular area. The scenario illustrated in FIG. 2B is similar to that of FIG. 2A in that the particular area is again the research laboratory 204 having a security access level of five, the guest 124 again arrives at the check-in location 140 within the reception area 212 of the enterprise facility 200, and the guest data 104 also indicates that the destination location 142 to which the guest 124 is to be escorted is the second office 202(2). However, the scenario illustrated in FIG. 2B differs from that of FIG. 2A in that the security authorization level assigned to the guest 124 is three - not five.

Here, the robotic security escort service 102 determines the alternate route 224 so as to escort the guest 124 to the second office 202(2) while maintaining adequate security levels with respect to sensitive enterprise resources by preventing the guest 124 from accessing the research laboratory 204. In the specifically illustrated example, despite the most direct route from the check-in location 140 to the destination location 142 passing through the research laboratory, the alternate route 224 that is determined completely avoids the research laboratory 204. Specifically, the alternate route 224 passes from the reception area 212 into the cafeteria 206 past the second set of doors 222(2) before circling around the outside of research laboratory 204 to the second office 202(2). As illustrated, the alternate route 224 passes only through areas of the enterprise facility 200 having security access levels that are less than or equal to a security authorization level that is assigned to the guest 124.

The robotic security escort service 102 may perform one or more security measures to prevent the guest 124 from accessing sensitive enterprise resources while being escorted from a first location to a second location. In some embodiments, the security measures may include causing one or more doors to a particular area of the enterprise facility 200 to become locked while the guest 124 escorted past the one or more doors. As illustrated for example, the robotic security escort service 102 has caused each of the second set of doors 222(2) and the third set of doors 222(3) to become locked to prevent the guest (and/or other unauthorized persons) from entering the research laboratory 204. In this way, the second set of doors 222(2) and the third set of doors 222(3) may remain unlocked when only employees of the enterprise or other authorized persons are located near the research laboratory 204, but may become immediately locked when unauthorized personal become near the research laboratory 204.

In some embodiments, the robotic security escort service 102 may monitor a physical location of the guest 124 while escorting the guest 124 along the particular route. For example, the robotic security escort 122 may utilize one or more sensors to monitor the physical location of the guest 124. Exemplary sensors for monitoring the physical location of the guest 124 include, but are not limited to, computer vision sensors that enable the robotic security escort 122 to directly observe and track the physical location of the guest 124, Radio Frequency Identification (RFID) systems that enable the robotic security escort 122 track the physical location of the guest 124 as a current location of an RFID tag (which may be active or passive) with respect to one or more RFID readers. The RFID readers may be located at a multitude of predetermined points within the enterprise facility 200. Additionally, or alternatively, an RFID reader may be located within the robotic security escort 122. Furthermore, the RFID tag may be located within a guest badge or other physical item that is provided to the guest 124 upon his or her arrival to the enterprise facility 200. In implementations in which the robotic security escort service 102 and/or the robotic security escort 122 monitors the physical location of the guest 124, the robotic security escort 122 may be enabled to perform various predefined actions in the event the guest 124 deviates from the route and/or becomes separated from the robotic security escort 122. For example, the robotic security escort 122 may sound an audible alarm (e.g. to alert employees that a guest is wondering around), transmit a phone communication to the guest (e.g., a text message requesting that the guest return to the route), alert a security officer of the enterprise that the guest needs to be located, or any other suitable remedial action.

The robotic security escort service 102 and/or the robotic security escort 122 may perform security measures in response to the physical location of the guest 124 deviating from a route along which the guest 124 is being escorted. As a specific but non-limiting example, if the guest 124 deviates from the route 224 by walking toward a restroom 218, the robotic security escort 122 may be programmed to identify this deviation and respond by verbally asking the guest 124 if he or she would like to use the restroom 218. If the guest 124 responds in the affirmative than the robotic security escort 122 may permit the guest 124 to deviate from the route to utilize the restroom 218 while waiting for the guest to return to the route. As another specific but nonlimiting example, if the guest 124 deviates from the route 224 by walking toward the second set of doors 222(2), the robotic security escort 122 may be programmed to identify this deviation and respond by verbally instructing the guest 124 that he or she is not permitted to access the research laboratory 204 and further instructing the guest 124 to return to the route 224.

In some embodiments, the robotic security escort service 102 and/or the robotic security escort 122 may be configured to trigger one or more alarms at the enterprise facility 200 in response to the physical location of the guest 124 deviating from a route along which the guest 124 is being escorted. For example, under circumstances in which the guest 124 has a security authorization level of four or lower, one or more alarms at the enterprise facility 200 may be triggered in response to the guest 124 deviating from the route along which he or she is being escorted and approaching the research laboratory 204 having the security access level of five. Furthermore, under some circumstances the doors 222 to the research laboratory 204 may be locked in response to a determination that the guest 124 has deviated from the route and is approaching the research laboratory 204.

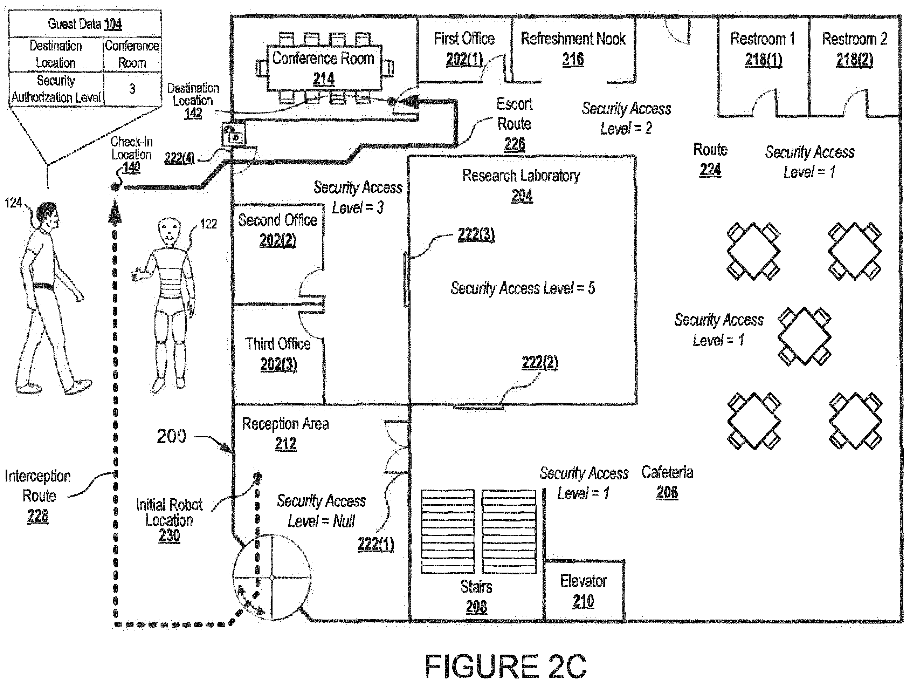

Turning now to FIG. 2C, illustrated is yet another alternate route 226 along which the robotic security escort 122 may guide the guest 124 to a destination location 142 after having intercepted the guest 124 at or near the enterprise facility 200. The scenario illustrated in FIG. 2C differs from that of FIG. 2B in that the destination location 142 is the conference room 214 and that the guest 124 does not arrive at the reception area 212 of the enterprise facility 200, but rather arrives outside of the fourth door 222(4). In the illustrated scenario, the robotic security escort 122 is first caused to travel along an interception route 228 from an initial robot location 230 to the check-in location 140. It should be appreciated that the initial robot location to 30 being illustrated within the reception area 212 is for exemplary purposes only and is not to be construed as limiting. After having traveled along the interception route 228 to intercept the guest 124, the robotic security escort 122 may perform one or more check-in procedures as described elsewhere herein to check the guest 124 into the enterprise facility 200.

In some embodiments, the interception route 228 along which the robotic security escort 122 is deployed to intercept the guest 124 may be determined based on an indication of a failed attempt to open a door of the enterprise facility 200. For example, suppose that the fourth door 222(4) is an exterior door to the enterprise facility 200 that can be opened only by authorized personnel such as, for example, employees of the enterprise having a company issued badge that can be scanned at the fourth door 222(4) to gain access to the enterprise facility. In such an example, if the guest 124 attempts to open the fourth door 222(4) without scanning such a company issued badge, the robotic security escort service 102 may detect this failed attempt to open the fourth door 222(4) and may respond by causing the robotic security escort 122 to depart from the initial robot location 230 to the known location of the fourth door 222(4). Then, upon approaching the guest 124 at or near the fourth door 222(4), the robotic security escort 122 may be programmed to ask the guest 124 one or more questions that are suitable for identifying the guest 124 and/or checking the guest 124 into the enterprise facility 200. As a specific but nonlimiting example, the robotic security escort 122 may be programmed to greet the guest 124 by verbally asking "Hello, welcome to our facility. Who will you be meeting today and where will this meeting be taking place?" Then, the robotic security escort service 102 may analyze a response that is provided by the guest 124 to determine the destination location 142.

Additionally, or alternatively, the interception route 228 may be determined based on location data 130 that is indicative of a current location of the guest 124. For example, as described above, a user device 126 may utilize a location module 128 to generate location data 130 indicating a current location of the guest 124. Then, the user device 126 may provide this location data 130 to the robotic security escort service 102 when one or more predefined conditions are satisfied. For example, the location module 128 may continually and/or periodically generate instances of the location data 130 and the user device 126 may transmit this location data 130 to the robotic security escort service 102 under the conditions that: (i) the current time is within a threshold time (e.g., 1 hour, 30 minutes, etc.) from the beginning of the meeting, and/or (ii) the current location of the guest 124 is within a threshold distance (e.g., 1 mile, 100 yards, etc.) from the enterprise facility 136. Based at least in part on a location data 130, the robotic security escort service 102 generates the interception route 228 and provides the robotic security escort 122 with route data 134 that defines the interception route 228.

Upon intercepting the guest 124 at the check-in location 140, the robotic security escort 122 may perform various actions to check the guest 124 into the enterprise facility 200 and/or generate confirmation data 132 that includes information that is pertinent to the guest's 124 visit to the enterprise facility 200. With respect to checking the guest 124 into the enterprise facility 200, the robotic security escort 122 may verify an identity of the guest 124 by examining one or more forms of identification provided by the guest 124 (e.g., a driver's license or other photo ID) and/or by performing one or more biometric identification techniques to biometrically confirm the identity of the guest 124. With respect to generating confirmation data 132, the robotic security escort 122 may be programmed to ask a series of questions such as, for example, whether the guest 124 would like to visit any locations-of-interest on the enterprise facility 200, whether the guest 124 would like to stop by the refreshment nook 216 to get a food or drink item, whether the guest 124 would like to visit any other persons while at the enterprise facility 200 other than those specific persons that are sponsoring the guest's 124 current visit, and/or any other questions that are pertinent to the guest 124 visiting the enterprise facility 200.

Furthermore, after having intercepted the guest 124 at the check-in location 140, the robotic security escort 122 may be caused to escort the guest 124 along an "escort" route 226 (that is different than the interception route 228) from the check-in location 140 to the destination location 142. As illustrated in FIG. 2C, for example, an "escort" route 226 is shown to pass through the fourth door 222(4) into the area of the enterprise facility 200 that is adjacent to the second office 222(2) and the third office 222(3). As illustrated, this area of the enterprise facility 200 has the security access level of three and, therefore, the guest 124 is permitted to walk through this area on his or her way to the conference room 214.

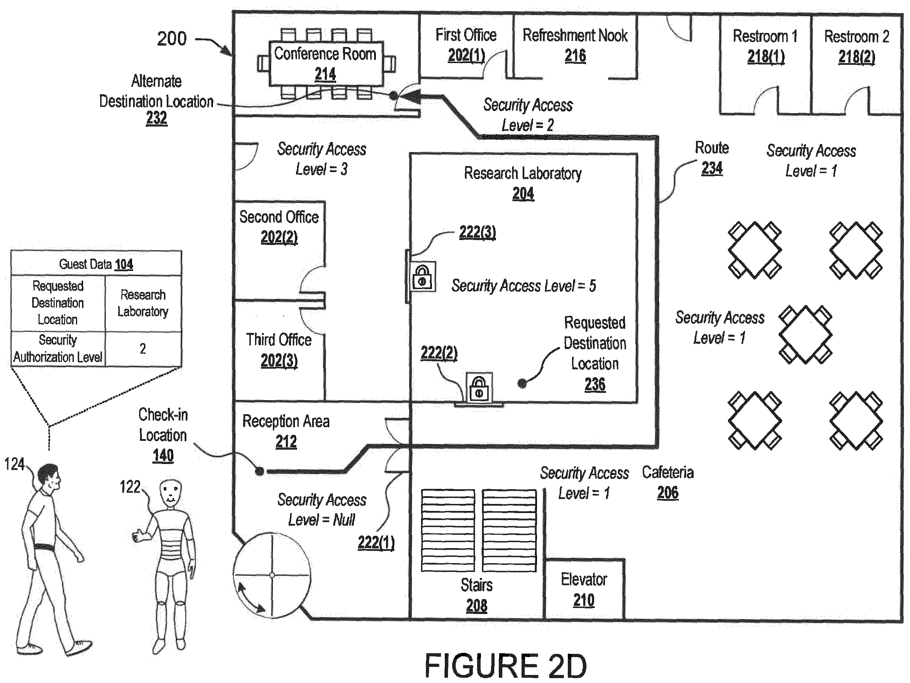

Turning now to FIG. 2D, illustrated is a scenario in which the robotic security escort 122 guides the guest 124 to an alternate destination location 232 in response to the guest 124 being restricted from accessing a requested destination location 236. As illustrated, the guest data 104 indicates that the requested destination location 236 corresponding to the guest 124 is the research laboratory 204 having the security access level of five. In some embodiments, upon arriving at the enterprise location 200 the guest 124 may be prompted by the robotic security escort 122 to indicate the requested destination location 236. For example, while initially greeting the guest 124 upon his or her arrival to the enterprise facility 200, the robotic security escort 122 may be programmed to verbally ask the guest 124 to identify the requested destination location 236. As further illustrated, the guest data 104 also indicates that the guest 124 has a security authorization level of two. It can be appreciated therefore that in the illustrated scenario the guest 124 does not have a high enough security authorization level to access the research laboratory 204. In particular, the security authorization level of two that is assigned of the guest 124 does not reach or exceed the security access level of five that is assigned to the research laboratory 204.

Based on the guest 124 being restricted from accessing the requested destination location 236, the robotic security escort service 102 may determine an alternate destination location 232 to which the guest 124 may be escorted within the enterprise facility 200 and that is appropriate for the actual security authorization level of the guest 124. In the illustrated example, the robotic security escort service 102 determines that the conference room 214 is a suitable alternate destination location 232 based on the guest 124 having a security authorization level of two. In some embodiments, the robotic security escort 122 may be programmed to inform the guest 124 that he or she is not actually permitted to access the requested destination location 236 and that a suitable alternate destination location 232 has been selected.

Furthermore, the robotic security escort service 102 may be configured to generate and transmit messages to one or more employees of the enterprise to inform them that the guest 124 is restricted from accessing the requested destination location 236. For example, suppose that a particular employee of the enterprise sends an invitation to the guest 124 (e.g. via email) inviting the guest 124 to meet with the particular employee in the research laboratory 204. Further suppose that the guest 124 accepts invitation and subsequently arrives at the enterprise facility 200 just prior to the scheduled meeting time. In such a scenario, both the guest 124 and the particular employee that invited the guest 124 to the meeting may both be wholly unaware that the guest 124 lacks a security authorization level which permits the guest 124 access to the research laboratory 204. In this scenario, upon the guest 124 checking in at the enterprise facility 200 and indicating that his or her requested destination location 236 is the research laboratory 204, the robotic security escort service 102 may automatically identify an alternate destination location 232 that is suitable for the guest 124 and the particular employee to meet based on the actual security authorization level of the guest 124 - and the particular employee if applicable. Furthermore, the robotic security escort service 102 may automatically transmit a message to the particular employee (e.g. via email, text message, pop-up notification on a work PC, etc.) to inform the particular employee that the guest 124 has arrived at the enterprise facility 200 and is being escorted to the alternate destination location 232 rather than the requested destination location 236 at which both the particular employee and the guest 124 initially intended to meet.

In some embodiments, the alternate destination location 232 may be determined based at least in part on a location of the requested destination location 236. For example, the alternate destination location 232 may be determined by identifying a closest predefined area to the requested destination location 236 that the security authorization level of the guest 124 permits access. In this way, since the guest 124 and/or the one or more employees sponsoring the guest's 124 visit to the enterprise facility 200 were already intending to meet at the requested destination location 236, an alternate destination location 232 may be determined that is minimally inconvenient to the guest 124 and the one or more sponsoring employees.

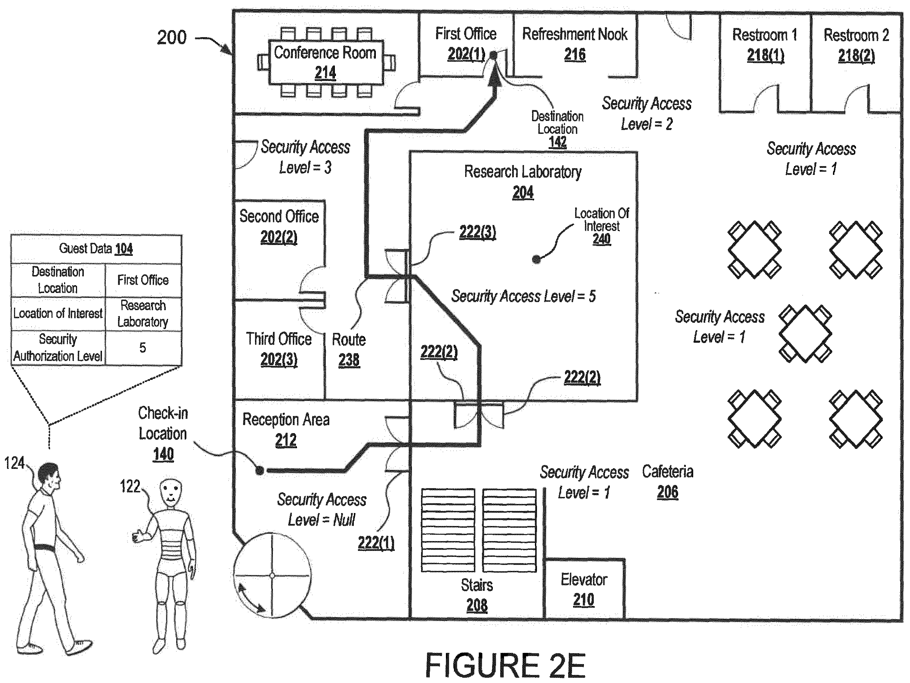

Turning now to FIG. 2E, illustrated is a scenario in which the robotic security escort 122 guides the guest 124 along a route 238 that is specifically selected so as to pass through a location-of-interest 240 on the way toward a destination location 142. As illustrated, the guest data 104 indicates that the destination location 142 for the guest 124 is the first office 202(1). The guest data 104 further indicates that the security authorization level of the guest 124 is five and that a location-of-interest 240 associated with the guest 124 is the research laboratory 204 having the security access level of five. As described above, under circumstances in which multiple routes can potentially be taken to a destination location 142, the robotic security escort service 102 may be biased to some degree to select individual routes which guide the guest 124 through locations-of-interest.

In the illustrated example, based on the guest date 104 indicating that the research laboratory 204 is a location-of-interest 240 to the guest 124, the robotic security escort service 102 selects the route 238 which passes through the research laboratory 204 before ultimately arriving at the first office 202(1) even though an alternate route (not shown) could have been selected. In particular, an alternate route (not shown) could have been selected to guide the guest 124 through the cafeteria 206, around the outside of the right wall of the research laboratory 204, past the refreshment nook 216, and ultimately into the first office 202.

In some embodiments, location-of-interest data 118 may define physical geolocations of a plurality of locations-of-interest as well as priority levels for individual locations of the plurality of locations-of-interest. Then, under circumstances in which time permits a guest to be escorted to a destination location along one of multiple acceptable routes that pass through multiple different locations-of-interest, the robotic security escort service 102 may select a particular route that passes through one or more particular locations-of-interest based on the priority level(s) associated with the one or more particular locations-of-interest being relatively higher than the priority levels associated with other locations-of-interest that one or more unselected routes pass through.

In some embodiments, individual priority levels may be assigned to individual locations-of-interest based on whether the individual locations-of-interest are guest provided locations-of-interest versus enterprise defined locations-of-interest. For example, suppose that the cafeteria 206 is defined by the enterprise as being a location-of-interest due to the cafeteria 206 being aesthetically pleasing. In this way, under circumstances in which multiple routes may be selected to escort a guest to a particular destination location, the robotic security escort service 102 may be biased to at least some degree to select individual routes that pass through the cafeteria so as to make their guests visits to the enterprise facility 200 more enjoyable. Further suppose that upon arriving at the enterprise facility 200, the guest 124 provides an indication to the robotic security escort service 102 that he or she would the interested in visiting and/or passing through the research laboratory 204 during his or her visit. Under these circumstances, the research laboratory 204 may be assigned a relatively higher "location-of-interest" priority level than the cafeteria 206 so that the robotic security escort service 102 is biased towards selecting routes for the guest 124 that pass through the research laboratory 204 to a higher degree than the robotic escort service 102 is biased towards selecting routes for the guest 124 that pass through the cafeteria 206.

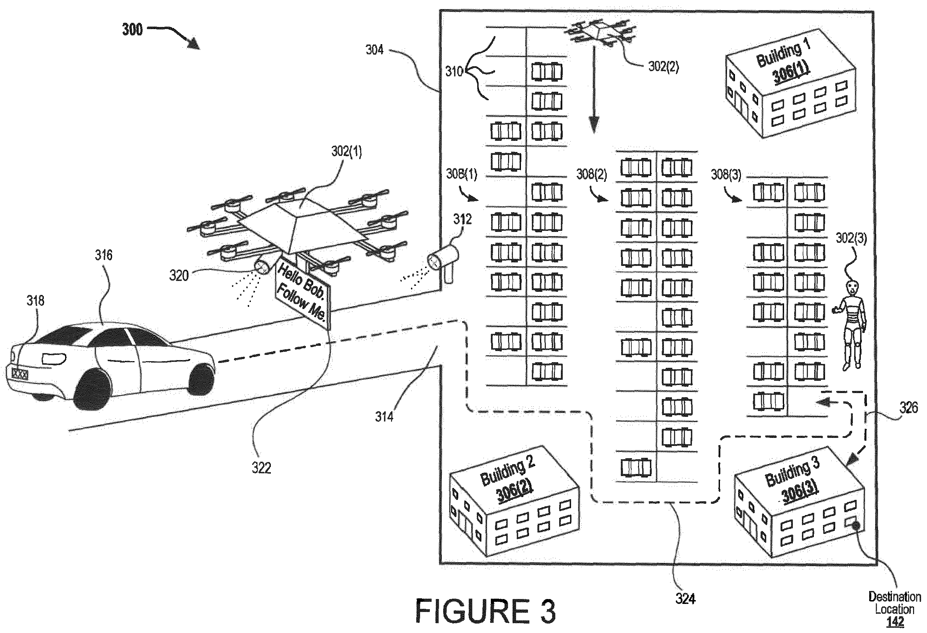

Turning now to FIG. 3, illustrated is an exemplary environment 300 in which multiple robotic security escorts 302 are deployed in unison to escort a guest during a visit to an enterprise facility 304. As illustrated, the exemplary environment 300 includes multiple buildings 306 in addition to multiple parking areas 308. As further illustrated, each parking area 308 includes a plurality of individual parking stalls 310 (only three of which are individually labeled to reduce illustrative clutter). As further illustrated, the exemplary environment 300 includes one or more sensors 312 (e.g., security cameras, computer vision cameras, etc.) for identifying traffic to and/or from the enterprise facility 304. For example, the one or more sensors 312 may be positioned at an entrance 314 to the enterprise facility 304 and may be communicatively coupled to the robotic security escort service 102 described in relation to FIG. 1. The robotic security escort service 102 may deploy the sensor(s) 312 to identify traffic into and out of the enterprise facility 304. For example, the one or more sensors 312 may be utilized to identify when a guest arrives at the enterprise facility 304. Then, upon a guest arriving at the enterprise facility 304, the multiple robotic security escorts 302 may be deployed in unison to escort the guest.

In some embodiments, the robotic escort service 102 may analyze traffic into the enterprise facility 304 to determine whether such traffic includes a guest to be escorted. For example, upon the vehicle 316 driving on to the enterprise facility 304, the robotic security escort service 102 may obtain some identifying information associated with the vehicle 316 such as a vehicle license plate 318. If the vehicle license plate 318 is registered to an employee of the enterprise, the robotic security escort service 102 may determine that no escort is appropriate since the traffic is simply the employee. Therefore, the robotic security escort service 102 may refrain from deploying the robotic security escorts 302 in association with the employee. In contrast, if the vehicle license plate 318 is not registered in association with an employee of the enterprise and/or is registered in association with a guest that will be visiting the enterprise, the robotic security escort service 102 may deploy one or more robotic security escorts 302 to intercept the vehicle and escort the guest as appropriate.

In the illustrated example, a guest arrives at the enterprise facility 304 in a vehicle 316 and the robotic security escort service 102 identifies the guest's arrival based on imagery that is captured via the sensor(s) 312. For example, prior to the guest's arrival at the enterprise facility 304, the guest may have already provided an indication of his or her license plate number to the robotic security escort service 102. Under these circumstances, upon determining that the vehicle 316 with this license plate number that was previously provided by the guest has entered the campus, the robotic security escort service 102 deploys the multiple robotic security escorts 302 in unison to escort the guest.

In some implementations, a first robotic security escort 302(1) may be deployed to guide the guest (whom may still be traveling in the vehicle 316) to an appropriate part of the enterprise facility 304. For illustrative purposes, consider circumstances in which the robotic security escort service 102 has determined based on imagery captured from the sensors 312 that the guest has just driven onto the enterprise facility 304 in the vehicle 316. Under these circumstances, the robotic security escort service 102 may deploy the first robotic security escort 302(1) to intercept the vehicle 316 and to instruct the vehicle 316 (and/or an occupant thereof such as the guest) to follow the first robotic security escort 302(1) to an appropriate location of the enterprise facility 304. In the illustrated example, the first robotic security escort 302(1) is shown to include a sensor 320 that may assist with identifying and/or tracking the vehicle 316. For example, the sensor 320 may be a camera or other type of sensor that enables the first robotic escort 302(1) to monitor its surrounding environment. Also in the illustrated example, the first robotic security escort 302(1) is shown to include a signal component 322 to attract the attention of the guest and instruct the guest to follow the first robotic security escort 302(1). In the specific but non-limiting example illustrated in FIG. 3, the signal component 322 is illustrated as a display device that is rendering the text of "Hello Bob. Follow me." However, the specific details are included only to adequately convey the concepts described herein - the specific details are not to be considered as limiting in any way.

After intercepting the vehicle 316, the first robotic security escort 302(1) travels along a route 324 to escort the guest to an appropriate area of the enterprise facility 304. In some implementations, one or more other robotic security escorts 302 may be deployed prior to or while the guest is being escorted to the appropriate area of the enterprise facility 304 to identify a current state of the enterprise facility 304. Then, based on the identified current state of the enterprise facility 304 the robotic security escort service 102 may determine the appropriate area of the enterprise facility 304 to which to escort the guest.

In some embodiments, determining the current state of the enterprise facility 304 may include deploying one or more second robotic security escorts 302(2) to travel throughout the enterprise facility 304 to identify the current state of the enterprise facility 304 and to communicate this information to the robotic security escort service 102 and/or other individual ones of the robotic security escorts 302. For example, in the illustrated implementation, a second robotic security escort 302(2) it is shown to be traversing throughout the multiple parking areas 308 to identify where there are currently individual empty parking stalls. Information regarding where empty parking stalls are may be used by the robotic security escort service 102 to identify a specific parking stall to escort the vehicle 316.

Identifying the specific parking stall may be based at least in part on a destination location 142 of the guest. For example, as illustrated the destination location 142 of the guest is within the third building 306(3) on the enterprise facility 304. Thus, the route 324 along which the first robotic security escort 302(1) guides the guest is shown to extend from the entrance 314 to a specifically identified empty parking stall that is just outside of the third building 306(3). In this way, a guest that is arriving on the enterprise facility 304 but is unfamiliar with precisely where on the enterprise facility 304 his or her destination location 142 actually is may be guided to an appropriate location of the enterprise facility 304 even before he or she parks and enters a reception area building 306. Furthermore, even for guests or employees that are familiar with the enterprise facility 304 and know where their destination location is, these techniques be deployed to guide the guest and/or employee to a currently empty parking location.

In the illustrated embodiment, a third robotic escort 302(3) has been deployed to the identified empty parking stall to which the guest is being escorted by the first robotic escort 302(1). The third robotic escort 302(3) may then greet the guest when he or she exits the vehicle 316. Upon greeting the guest, the third robotic escort 302(3) may perform one or more of the check-in procedures as described above such as, for example, deploying one or more biometric sensors to confirm the identity of the arriving guest (e.g., facial recognition, fingerprint scan, iris-recognition, etc.). Then, third robotic escort 302(3) escorts the guest along another route 326 into the third building 306(3) and ultimately to the guest's destination location 142.

It should be appreciated that although the first and second robotic security escorts are illustrated as unmanned aerial vehicle (UAVs) and the third robotic security escort is illustrated as a humanoid type robot, these implementation details are provided for exemplary purposes only and are not to be construed as limiting. For example, in some implementations the first and/or second robotic security escort may be a ground driven autonomous vehicle. Furthermore, in some implementations the third robotic security escort may be a UAV and/or ground driven autonomous vehicle rather than a humanoid type robot as illustrated.

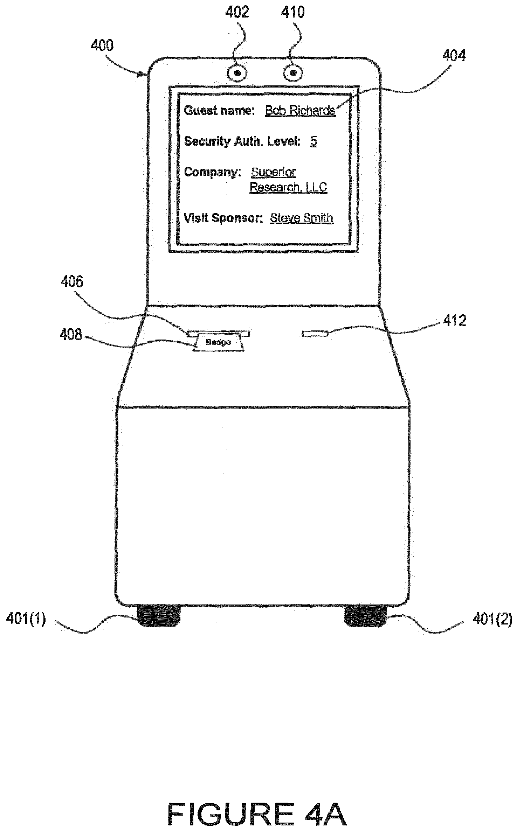

Turning now to FIG. 4A, illustrated is an exemplary robotic security escort 400 that can be deployed to implement various techniques described herein. As illustrated, the robotic security escort 400 is configured with one or more wheels 401 that enable the robotic security escort 400 to travel horizontally across a floor. Such an embodiment is for illustrative purposes only and as described in relation to FIGS. 1-2E, in various other embodiments the robotic security escort may be a humanoid type robot that is configured to traverse across the floor and/or walk up a staircase on two or more legs.

In some embodiments, the robotic security escort 400 includes a biometric sensor 402 that may be deployed to confirm an identity of an arriving guest. For example, the biometric sensor 402 may be deployed by the robotic security escort 400 to confirm the identity of an arriving guest by performing facial recognition against the guest's face, by performing Iris-recognition techniques by scanning an Iris of the arriving guest, or by scanning a fingerprint of the arriving guest. As described above, upon confirming the guest's identity, the robotic security escort 400 may be caused to adhere to routes within an enterprise facility that are appropriate based on various characteristics of the guest such as, for example a security access level that is assigned to the guest with respect to an enterprise facility and/or any special accommodations associated with the guest (e.g., whether the guest requires an elevator as opposed to stairs).

In some embodiments, the robotic security escort 400 may be configured to visibly indicate various types of information associated with a guest that is currently being escorted by the robotic security escort 400. As illustrated, for example, the robotic security escort 400 is configured with a display screen 404 that renders various fields of information that are associated with a guest whom is currently being escorted by the robotic security escort 400. Exemplary such fields of information include, but are not limited to, a name of the guest, a security authorization level of the guest, a company that the guest is an employee of, an employee of the enterprise which the guest is being escorted within that has sponsored the guest's visit, and/or any other types of information pertinent to the guest's visit to the enterprise. In the specifically illustrated but nonlimiting embodiment, the display screen 404 is shown to be rendering the guest's name of "Bob Richards," the guest's security authorization level of "5," the company "Superior Research, LLC" of which the guest is an employee, and the employee of the enterprise "Steve Smith" which is sponsoring the guest's visit to the enterprise facility.

It will be appreciated that by providing an indication of a guest's security authorization level with respect to the enterprise facility, employees of the enterprise may be afforded an ability to modify their behavior while the guest is in their presence. For example, if a guest that is visiting the enterprise facility has a very high security authorization level, then employees of the enterprise may understand that it is appropriate and/or acceptable that they share certain types of information with the guest such as proprietary designs that belong to the enterprise. In contrast, if the guest that is visiting the enterprise facility has a very low security authorization level, then employees of the enterprise may understand that it is not appropriate and/or is unacceptable for them to share these same types of information with the guest.

In some embodiments, the robotic security escort 400 may be configured to perform one or more check-in procedures with respect to the guest. For example, as illustrated, the robotic security escort 400 is configured with a printer 406 that is configured to print out a badge 408 that uniquely corresponds to the guest and which the guest will wear or otherwise carry during his or her visit to the enterprise facility. In some embodiments, the robotic security escort 400 is configured with a camera 410 for taking a photographic image of the guest which is then printed onto the badge 408.

In some embodiments, the robotic security escort 400 may be configured to facilitate the transfer of digital content between one or more networking resources at the enterprise facility and one or more computing devices and/or storage devices brought to the enterprise facility by the guest. For example, in the illustrated embodiment the robotic security escort 400 is configured with an input port 412 through which a guest may provide digital content to the robotic security escort 400. As a specific but nonlimiting example, the input port may be a Universal Serial Bus (USB) port into which a guest may plug a USB drive to transfer digital content (slideshow presentations, PDF documents, etc.). Upon receipt of the digital content, the robotic security escort 400 may perform one or more security measures with respect to the digital content. For example, the robotic security escort 400 may load the digital content into a containerized computing environment and may scan the digital content for viruses and/or other harmful and/or malicious content. In some embodiments, the robotic security escort 400 may be configured to disconnect from a network at the enterprise facility in order to scan the digital content. Then, upon determining that the digital content is safe (e.g., does not contain viruses), the robotic security escort 400 may reconnect to the network at the enterprise facility to provide the digital content to one or more enterprise resources. As a specific but non-limiting example, a guest may arrive at enterprise facility in order to share a presentation with employees the enterprise on a screen within a conference room. Under these circumstances, the guest may provide the presentation to the robotic security escort 400 via the input port 412 to cause the robotic security escort 400 to 1^{st} scan the presentation for security purposes and then to wirelessly transfer the presentation to a projector within the conference room.

In some embodiments, the robotic security escort 400 may be configured to update a meeting invitation (associated with a guest's visit to an enterprise facility) to include digital content that is provided to the robotic security escort by the guest upon his or her arrival at the enterprise facility. For example, the guest may arrive at the enterprise facility in order to attend a meeting that is stored on one or more enterprise employees' calendars. Then, upon the guest providing the digital content to the robotic security escort 400 in association with the meeting, the robotic security escort 400 may upload the digital content directly into a calendar object associated with the meeting so that the one or more enterprise employees' have direct access to the digital content via each of their individual enterprise calendars.

In some embodiments, the robotic security escort 400 may be configured to store and transmit "sensitive" data through one or more nonsecure portions of an enterprise facility. For example, consider a scenario in which an employee of the enterprise intends to share proprietary information with a guest during a meeting that is to take place within a particular conference room of the enterprise facility. Further suppose that the proprietary information is not permitted to be stored on unsecured devices (e.g., USB drives, laptop computers, etc.) outside of a research laboratory on the enterprise facility. Under these circumstances, the robotic security escort 400 may be initially deployed to escort the guest into the research laboratory to meet the employee. Then, the employee may load the proprietary information into a storage unit of the robotic security escort 400. For example, the employee may insert a USB thumb drive into the input port of the robotic security escort 400. Once the proprietary information has been uploaded into the robotic security escort 400, the robotic security escort 400 may securely store this proprietary information while escorting one or both of the guest and the employee from the research laboratory to the conference room. In this way, the robotic security escort 400 may securely transport highly sensitive proprietary information through nonsecure portions of an enterprise facility such as, for example, a cafeteria or other area where sniffing devices may be present. In some embodiments, the robotic security escort 400 may be configured to immediately destroy such proprietary information upon its use for its intended purpose. For example, if the intended purpose is simply to share the proprietary information with the guest for a limited duration during a specific meeting in the conference room, then immediately following the specific meeting the robotic security escort 400 may destroy the proprietary information by deleting it from its storage devices.

In some embodiments, the robotic security escort 400 may be caused to guide the guest to a sequence of waypoints during his or her visit to the enterprise facility. As a specific but nonlimiting example, upon the guest's arrival at the enterprise facility the robotic security escort 400 may first escort the guest to a conference room to attend a scheduled meeting. Then, subsequent to the scheduled meeting the robotic security escort 400 may then escort the guest to a desk and/or office of an employee which the guest has indicated that he or she would like to converse with while visiting the enterprise facility. Furthermore, in some implementations the robotic security escort 400 may be configured to ensure that the guest is timely with respect to one or more prioritized engagements. For example, suppose that the guest is scheduled to attend a meeting with one or more high-level employees of the enterprise in a conference room that is across campus from the guest current location. Further suppose that the guest is casually conversing with an employee that the guest indicated that he or she would like to converse with while on campus. For purposes of the present example, presume that the importance of the guest being timely to the meeting with the one or more high-level employees of the enterprise is quite important and that the conference room is across campus will take roughly 10 minutes to walk to from the guest's current location. Under these circumstances, the robotic security escort service 102 and/or the robotic security escort 400 may monitor a time in relation to a scheduled start time for the meeting and may further monitor the physical location of the guest with respect to the conference room that has been reserved for the meeting. Then, the robotic security escort service 102 and/or the robotic secure the escort may prompt the guest to begin traveling toward the conference room with enough time to ensure that the guest timely arrives at the meeting.

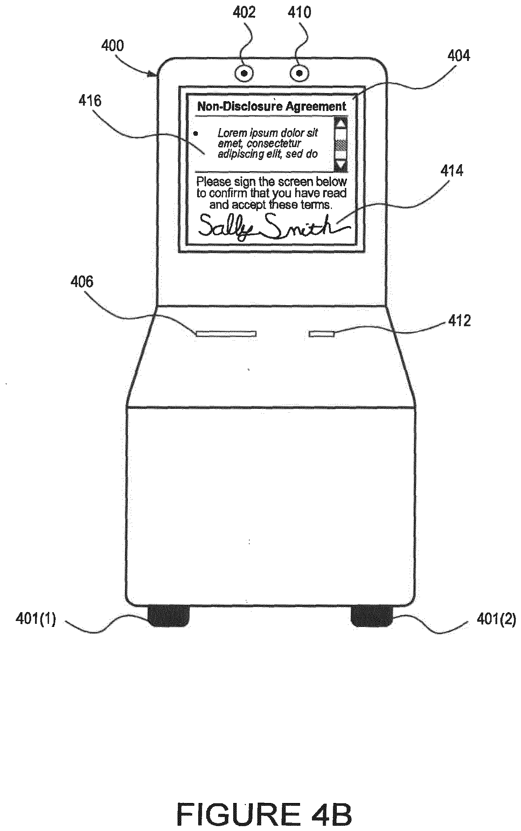

Turning now to FIG. 4B, illustrated is the exemplary robotic security escort 400 while being deployed to enable the guest to accept terms of a non-disclosure agreement in association with a visit to an enterprise facility. For example, an enterprise may enforce a security policy that requires persons to read and accept terms of a non-disclosure agreement prior to being permitted access to various sensitive enterprise resources. Thus, upon the guest arriving at a reception area to check-in for a visit to the enterprise facility, a determination may be made as to whether the guest's visit will include providing access to sensitive enterprise resources (e.g., escorting the guest through a research laboratory, permitting the guest view confidential presentation slides within a conference room, etc.). Then, if it is determined that the guest's visit is to include providing access to sensitive enterprise resources, the robotic security escort 400 may render a nondisclosure agreement on the display screen 404 to enable the guest to read and accept the terms of the nondisclosure agreement prior to being provided with access to the sensitive enterprise resources.

In some embodiments, the display screen 404 may be configured with touchscreen capabilities to enable the guest to scroll through an entire nondisclosure agreement. Furthermore, in such embodiments the touchscreen capabilities of the display screen 404 may enable the guest to confirm that he or she has read the terms of the nondisclosure agreement and furthermore that he or she accepts those terms. For example, as illustrated in FIG. 4B, the display screen 404 is shown to be rendering a portion of the nondisclosure agreement 416. As further illustrated in FIG. 4B the touchscreen capabilities of the display screen 404 have enabled the guest to sign the nondisclosure agreement by providing the signature 414 (e.g., which reads "Sally Smith" in the illustrated example). In some embodiments, the robotic security escort 400 may deploy the camera 410 to record video footage of the guest executing (e.g., signing) the nondisclosure agreement. In this way, an additional level of security may be provided in the event that a guest subsequently refutes his or her acceptance of the nondisclosure agreement.

In some embodiments, the robotic security escort 400 may be configured to accept a fully executed nondisclosure agreement from the guest that is in physical form. For example, upon the guest arriving at a reception area of the enterprise facility, the guest may be provided with a paper copy of the nondisclosure agreement and/or a pen to sign the nondisclosure agreement. Then, the guest may be asked to carefully read the nondisclosure agreement and upon his or her acceptance of the terms thereof to execute the nondisclosure agreement by signing and/or initialing one or more appropriate locations of the paper form nondisclosure agreement. Then, the guest may be prompted to hold one or more individual pages of the nondisclosure agreement within view of the camera 410 to enable the robotic security escort 400 to obtain digital copies of the fully executed nondisclosure agreement.

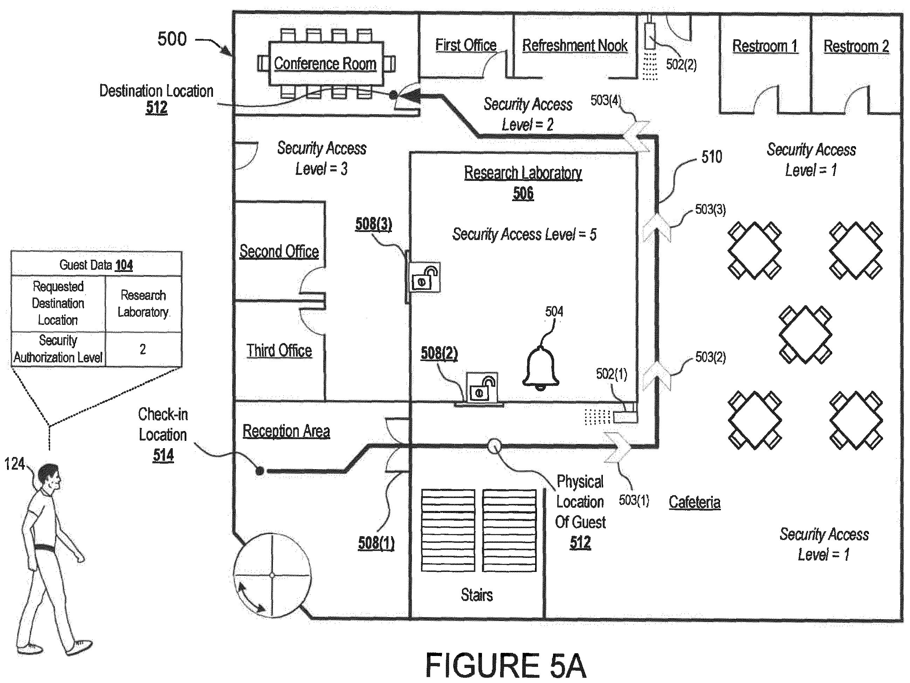

Turning now to FIG. 5A, illustrated is an exemplary enterprise facility 500 that is configured with one or more sensors 502 to track a physical location of the guest 124 and to generate one or more signals to guide the guest 124 to a destination location 512. As illustrated, the exemplary enterprise facility 500 includes a first sensor 502(1) and second sensor 502(2) that are each located to monitor different areas of the enterprise facility 500. Exemplary sensors include, but are not limited to, cameras that are communicatively coupled to the robotic security escort service 102. As further illustrated, the exemplary enterprise facility 500 includes an alarm system 504 which may be comprised of, for example, lights and/or audible sirens. The exemplary enterprise facility 500 also includes a research laboratory 506 having a security access level of five as well as a plurality of doors 508 that persons may walk-through to exit and/or enter various predefined areas of the enterprise facility. In particular, the enterprise facility 500 includes a first door 508(1) through which persons may walk from the reception area into a cafeteria. The enterprise facility 500 also includes a second door 508(2) and a third door 508(3) - each of which pass into the research laboratory 506.

In some embodiments, the enterprise facility 500 is configured to generate one or more signals that instruct the guest 124 how to travel from a check-in location 514 to a destination location 512. As illustrated for example, the enterprise facility 500 is shown to include a plurality of arrow shaped lights 503 that are embedded within a floor and that may be selectively illuminated in order to guide the guest from the check-in location 514 to the destination location 512. In some implementations, the robotic security escort service 102 receives sensor data from the sensors 502 (e.g., cameras, RFID readers, and/or any other type of sensor suitable for tracking a physical location of a person and/or item which a person may carry) in selectively illuminates individual arrow shaped lights 503 based on the physical location of the guest 512. In this way, signals may be controllably modulated within the enterprise facility to escort the guest from the check-in location 514 along a predetermined route 510 to the destination location 512 even in scenarios are a physical robotic escort (e.g., the robotic security escort 122 described in relation to FIG. 1) are not physically deployed to escort the guest 124.

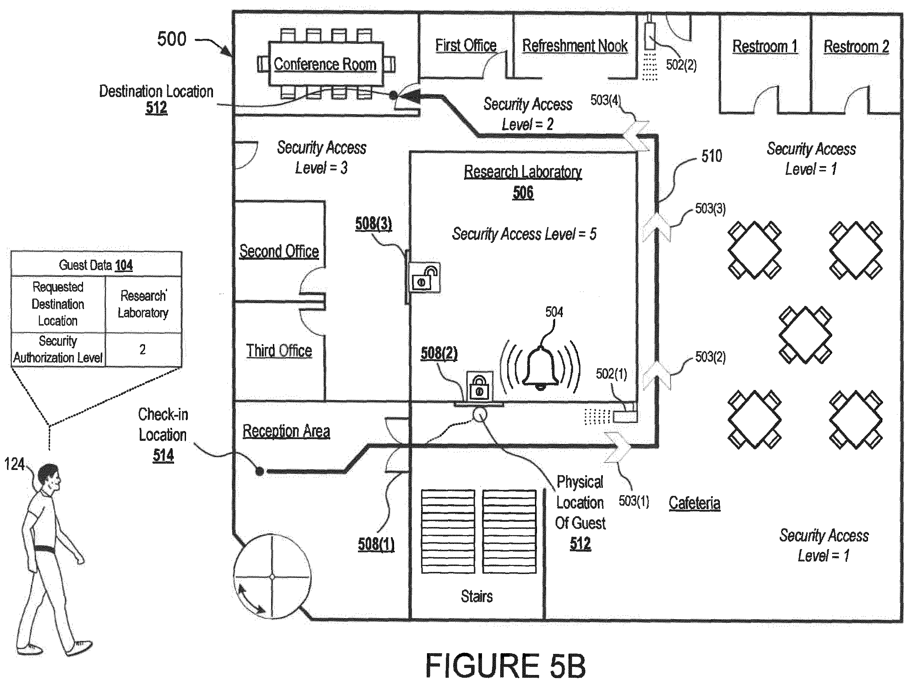

Turning now to FIG. 5B, illustrated is a scenario in which the exemplary enterprise facility 500 has initiated one or more security measures in response to the physical location of the guest 512 deviating from the route 510 that has been selected based on the security authorization level of the guest 124. For example, by monitoring the sensor data that is received from the one or more sensors 502, the robotic security escort service 102 may identify that the physical location of the guest 512 has deviated from the route 510 toward the second door 508(2) through which persons may access the research laboratory 506. Then, because the security authorization level that is assigned to the guest 124 does not permit access to the research laboratory 506, the robotic security escort service may cause the alarm system 504 to emit one or both of light and/or sound. In this way, the guest 124 and/or other personnel within the enterprise facility 500 may become apprised that the guest 124 is not authorized to access the research laboratory 506. In some implementations, the enterprise facility 500 may include speakers and may utilize the speakers to verbally instruct the guest 124 return to the route 510. As further illustrated, the robotic security escort service 102 may cause the second door 508(2) to become immediately locked upon determining that the guest has deviated away from the route 510 toward the second door 508(2).

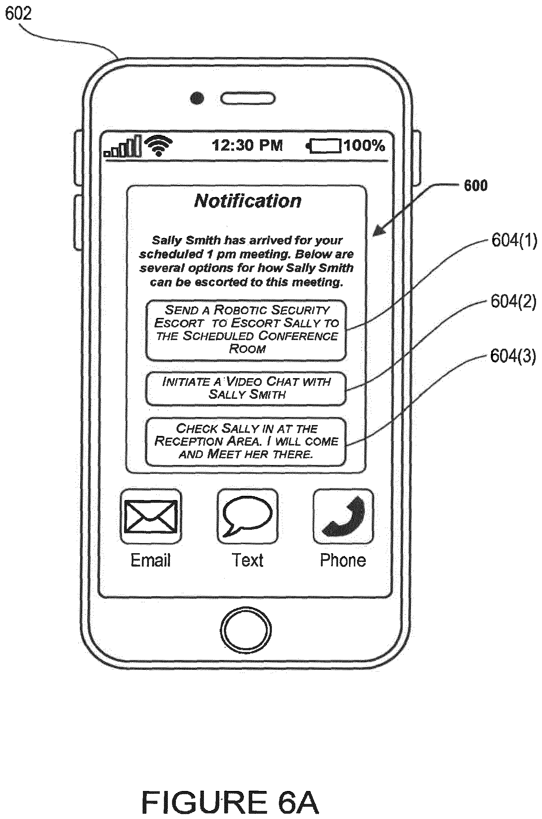

Turning now to FIG. 6A, illustrated is an exemplary notification graphical user interface (GUI) 600 that can be presented on a computing device to inform an enterprise employee that a guest has arrived for a scheduled visit. In the specifically illustrated embodiment, the notification GUI 600 is shown in the form of a pop-up notification that is displayed on a mobile device 602 such as, for example, a smart phone, a tablet computer, a laptop computer, or any other mobile computing device. Additionally, or alternatively, the employee may be notified that the guest has arrived for the scheduled visit via a desktop-computer based notification, an Internet-of-Things (IoT) notification (e.g., an IoT digital personal assistant may audibly form guest has arrived), or any other suitable technology.

In various embodiments, the notification GUI 600 may provide the employee with an ability to select between various actions that can be performed by a robotic security escort. For example, the notification GUI 600 may render one or more interface elements 604 that are selectable by the employee (e.g., via touch screen capabilities of the mobile device 602) to instruct the robotic security escort to perform a specific action with respect to the guest's visit to the enterprise facility. In the specifically illustrated but nonlimiting example, a first user interface element 604(1) it is shown that may be selected to deploy a robotic security escort to escort the guest to a scheduled conference room. For example, as described above the robotic security escort may analyze calendar data to identify a particular conference room within which the guest is scheduled to meet with the enterprise employee. Under these circumstances the robotic security escort may identify this particular conference room before or after checking the guest into the enterprise facility may escort the guest as described herein to this particular conference room.

In some embodiments, the employee may be provided with an option to initiate some form of communication with the guest. For example, as illustrated a second user interface element 604(2) it is shown that may be selected by the employee to initiate a video chat with the guest. As a specific but nonlimiting example, the guest may stand in front of the camera 410 that is incorporated into the robotic security escort 400 as shown in FIGS. 4A and 4B and a videoconference may be initiated between the robotic security escort 400 and the mobile device 602. In some implementations, the video conference between the guest and the employee may remain initiated for at least some period while the guest is being escorted throughout the enterprise facility. For example, under circumstances where the employee is walking to a meeting location from one end of the enterprise campus and the guest is being escorted to the meeting location from an opposite end of the enterprise campus a video and/or audio communication session may be facilitated between the mobile device 602 and the robotic security escort 400 to enable the guest and the employee to communicate with one another while each of them walk to the meeting location.

In some embodiments, the guest may be provided with an option to instruct the robotic security escort to check the guest into the enterprise facility while the employee comes to meet the guest at some predefined location. For example, as illustrated a third user interface element 604(3) it is shown that is selectable by the employee to instruct the robotic security escort 400 to perform one or more check-in procedures with respect to the guest within a reception area and to further inform the robotic security escort 400 that it is not necessary physically escort the guest anywhere on the enterprise facility because the employee intends to come to the reception area and greet the guest personally.

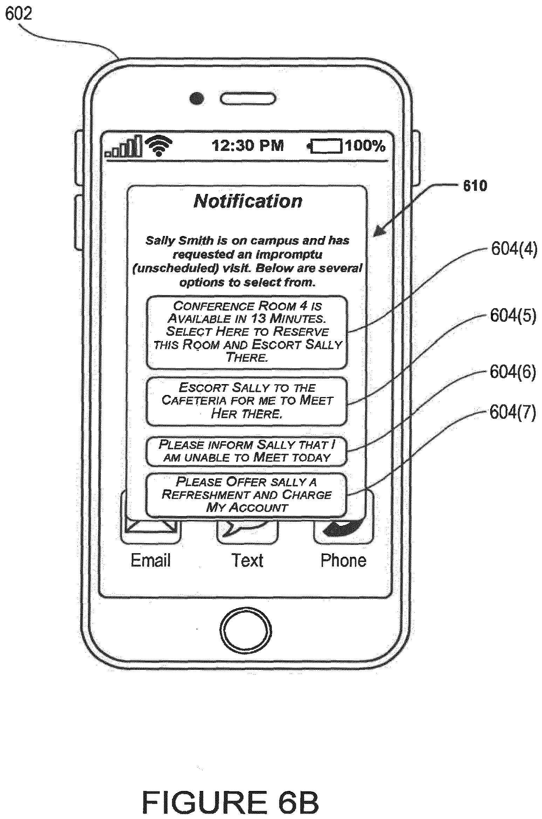

Turning now to FIG. 6B, illustrated is another exemplary notification GUI 610 that can be presented on a computing device 602 to inform enterprise employee that a guest has arrived and has requested an impromptu (e.g., unscheduled) visit. Furthermore, the notification GUI 610 provides the enterprise employee with an ability to select between various actions that robotic security escort can perform with respect to the guest.

In some embodiments, the notification GUI 610 enables the enterprise employee to reserve an available conference room and to instruct the robotic security escort 400 to escort the guest to this room for an impromptu meeting. For example, as illustrated a fourth user interface elements 604(4) is shown that informs the enterprise employee that a particular conference room (i.e., Conference Room 4) will become available shortly (e.g. in 13 minutes) and that provides the enterprise employee with an option to immediately reserve this conference room while also instructing the robotic security escort 400 to escort the guest to this conference room. In some embodiments, the notification GUI 610 provides the enterprise employee with multiple options for various locations to escort the guest to for an impromptu meeting. For example, as illustrated a fifth user interface element 604(5) is shown that is selectable by the enterprise employee to deploy the robotic security escort 400 to escort the guest to a cafeteria in order to conduct an impromptu meeting. As further illustrated, the notification GUI 610 may further enable enterprise employee to instruct the robotic security escort 400 to politely inform the guest that an impromptu meeting will not be possible at this time. For example, as illustrated a sixth user interface element 604(6) is shown that is selectable by the enterprise employee to decline the impromptu meeting.

In some embodiments, the robotic security escort 400 may be configured to conduct various transactions on behalf of the enterprise employee and/or the guest. For example, as illustrated a seventh user interface element 604(7) may be selected by the enterprise employee to instruct the robotic security escort 400 to offer the guest a refreshment (e.g., coffee, soda, snacks, etc.) and to have any items that the guest accepts charged to a financial account of the enterprise employee. Additionally, or alternatively, the robotic security escort 400 may be configured to offer the guest refreshments and to accept payment directly from the guest for any refreshments desired. For example, the guest may grab a beverage from a refreshment stand and the robotic security escort may accept a credit card from the guest.

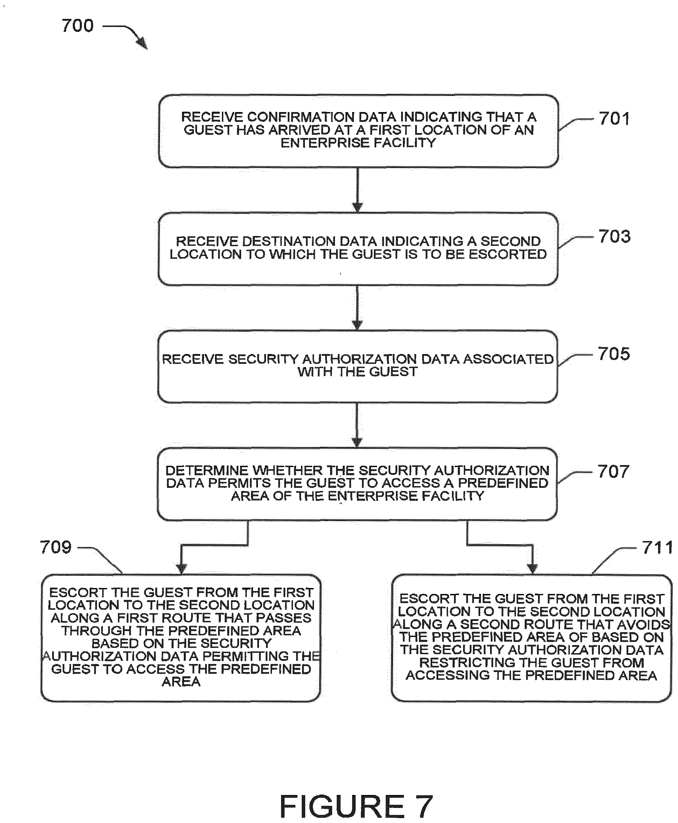

FIG. 7 is a flow diagram of an example process 700 which is described with reference to FIGS. 1 - 5B. The process 700 is illustrated as a collection of blocks in a logical flow graph, which represent a sequence of operations that can be implemented in hardware, software, or a combination thereof. In the context of software, the blocks represent computer-executable instructions that, when executed by one or more processors, perform the recited operations. Generally, computer-executable instructions include routines, programs, objects, components, data structures, and the like that perform or implement particular functions. The order in which operations are described is not intended to be construed as a limitation, and any number of the described blocks can be combined in any order and/or in parallel to implement the process. Other processes described throughout this disclosure shall be interpreted accordingly.

FIG. 7 illustrates an example process 700 that may be performed by the robotic security escort service 102 to determine alternate routes for escorting a guest throughout the enterprise facility based on security authorization data associated with the guest.

At block 701, the robotic security escort service 102 receives confirmation data indicating that a guest has arrived at a first location of an enterprise facility. For example, as described in relation to FIG. 1, the guest may arrive at a reception area and may then utilize a check-in terminal to check into the enterprise facility. As another example, a robotic security escort 122 and/or 400 may be deployed to greet the guest upon his or her arrival to the enterprise facility and perform one or more check-in procedures such as, for example, by a biometrically confirming an identity of the guest, inquiring with the guest as to whether he or she requires any special accommodations, and so on.

At block 703, the robotic security escort service 102 receives destination data indicating a second location within the enterprise facility to which the guest is to be escorted. For example, in scenarios in which the guest arrives at the reception area and utilizes the check-in terminal to check into the enterprise facility, the guest may be prompted to indicate the destination location as described above. As another example, the robotic security escort service 102 may parse through calendar data as described in relation to FIG. 1 in order to identify a specific calendar event to which the guest has accepted an invitation and which has designated a particular conference room as a place at the specific calendar event will occur.

At block 705, the robotic security escort service 102 receives security authorization data associated with the guest. As described above, the security authorization data may define one or more security levels of the guest with respect to the enterprise facility and/or with respect to one or more specific predefined areas of the enterprise facility. For example, the security authorization data may define a security authorization level of five that applies the enterprise facility as a whole. As described above, the security authorization level(s) that are defined in association with the guest may be used to determine various areas of the enterprise facility the guest is permitted to access and/or restricted from accessing.

At block 707, the robotic security escort service 102 determines whether the security authorization data permits the guest to access the predefined area of the enterprise facility. For example, the robotic security escort service 102 may determine whether the security authorization data permits the guest to access the research laboratory that is located directly between the reception area at which the guest has checked in (e.g. the first location) and a conference room at which the guest is to attend a meeting with one or more sponsoring employees (e.g. the second location). Then, based on whether the guest is permitted to access the predefined area, the robotic security escort service may select between two or more alternate routes that lead from the first location to the second location.

In the event that the guest is permitted to access the predefined area, the process 700 proceeds to block 709 at which the robotic security escort service performs one or more actions so as to escort the guest from the first location to the second location along a first route that passes through the predefined area. For example, under circumstances in which the predefined area is a research laboratory having a security access level of five and the security authorization data indicates that the guest has a security authorization level of five and is therefore permitted to access the research laboratory, the robotic security escort service 102 may select the first route that passes through the research laboratory due to this first route being the shortest route that can be taken between the first location and the second location.

In contrast, in the event that the guest is restricted from accessing the predefined area, the process 700 proceeds to block 711 at which.the robotic security escort service performs one or more actions so as to escort the guest from the first location to the second location along a second route that avoids the predefined area. For example, continuing with the circumstances in which the predefined area is the research laboratory having a security access level of five, suppose instead that the security authorization data indicates that the guest has a security authorization level of two and therefore is restricted from accessing the research laboratory. Under these alternate circumstances, the robotic security escort service 102 may select the second route that avoids the research laboratory due to this second route being suitable for maintaining adequate security levels with respect to sensitive enterprise resources even though this second route may be relatively inconvenient as compared to one or more other routes that could potentially be taken.

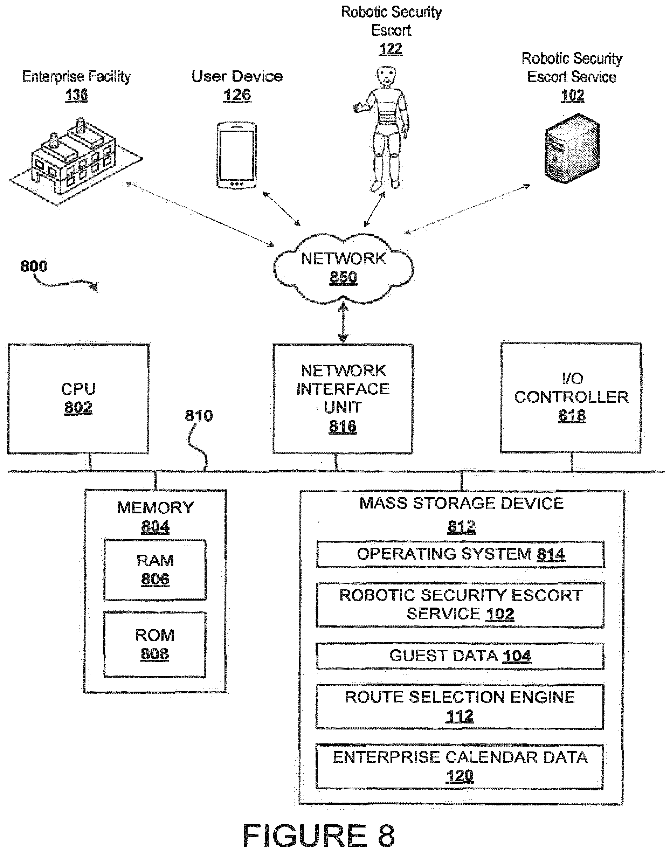

FIG. 8 shows additional details of an example computer architecture for a computer capable of executing the functionalities described herein such as, for example, those described with reference to the robotic security escort service 102, or any program components thereof as described herein. Thus, the computer architecture 800 illustrated in FIG. 8 illustrates an architecture for a server computer, or network of server computers, or any other types of computing devices suitable for implementing the functionality described herein. The computer architecture 800 may be utilized to execute any aspects of the software components presented herein.

The computer architecture 800 illustrated in FIG. 8 includes a central processing unit 802 ("CPU"), a system memory 804, including a random-access memory 806 ("RAM") and a read-only memory ("ROM") 808, and a system bus 810 that couples the memory 804 to the CPU 802. A basic input/output system containing the basic routines that help to transfer information between elements within the computer architecture 800, such as during startup, is stored in the ROM 808. The computer architecture 800 further includes a mass storage device 812 for storing an operating system 814, other data, and one or more application programs. The mass storage device 812 may further include the robotic security escort service 102.

The mass storage device 812 is connected to the CPU 802 through a mass storage controller (not shown) connected to the bus 810. The mass storage device 812 and its associated computer-readable media provide non-volatile storage for the computer architecture 800. Although the description of computer-readable media contained herein refers to a mass storage device, such as a solid-state drive, a hard disk or CD-ROM drive, it should be appreciated by those skilled in the art that computer-readable media can be any available computer storage media or communication media that can be accessed by the computer architecture 800.

Communication media includes computer readable instructions, data structures, program modules, or other data in a modulated data signal such as a carrier wave or other transport mechanism and includes any delivery media. The term "modulated data signal" means a signal that has one or more of its characteristics changed or set in a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

By way of example, and not limitation, computer storage media may include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer architecture 800. For purposes of the claims, the phrase "computer storage medium," "computer-readable storage medium" and variations thereof, does not include waves, signals, and/or other transitory and/or intangible communication media, per se.

According to various techniques, the computer architecture 800 may operate in a networked environment using logical connections to remote computers through a network 850 and/or another network (not shown in FIG. 8). The computer architecture 800 may connect to the network 850 through a network interface unit 816 connected to the bus 810. It should be appreciated that the network interface unit 816 also may be utilized to connect to other types of networks and remote computer systems. The computer architecture 800 also may include an input/output controller 818 for receiving and processing input from a number of other devices, including a keyboard, mouse, or electronic stylus (not shown in FIG. 8). Similarly, the input/output controller 818 may provide output to a display screen, a printer, or other type of output device (also not shown in FIG. 8). It should also be appreciated that via a connection to the network 850 through a network interface unit 816, the computing architecture may enable one or more of the robotic security escort service 102, the robotic security escort 122, the user device 126, and/or at the enterprise facility 136 to communicate with one another.

It should be appreciated that the software components described herein may, when loaded into the CPU 802 and executed, transform the CPU 802 and the overall computer architecture 800 from a general-purpose computing system into a special-purpose computing system customized to facilitate the functionality presented herein. The CPU 802 may be constructed from any number of transistors or other discrete circuit elements, which may individually or collectively assume any number of states. More specifically, the CPU 802 may operate as a finite-state machine, in response to executable instructions contained within the software modules disclosed herein. These computer-executable instructions may transform the CPU 802 by specifying how the CPU 802 transitions between states, thereby transforming the transistors or other discrete hardware elements constituting the CPU 802.

Encoding the software modules presented herein also may transform the physical structure of the computer-readable media presented herein. The specific transformation of physical structure may depend on various factors, in different implementations of this description. Examples of such factors may include, but are not limited to, the technology used to implement the computer-readable, media, whether the computer-readable media is characterized as primary or secondary storage, and the like. For example, if the computer-readable media is implemented as semiconductor-based memory, the software disclosed herein may be encoded on the computer-readable media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope and spirit of the present description, with the foregoing examples provided only to facilitate this discussion.

In light of the above, it should be appreciated that many types of physical transformations take place in the computer architecture 800 in order to store and execute the software components presented herein. It also should be appreciated that the computer architecture 800 may include other types of computing devices, including hand-held computers, embedded computer systems, personal digital assistants, and other types of computing devices known to those skilled in the art. It is also contemplated that the computer architecture 800 may not include all of the components shown in FIG. 8, may include other components that are not explicitly shown in FIG. 8, or may utilize an architecture completely different than that shown in FIG. 8.

### EXAMPLES OF VARIOUS IMPLEMENTATIONS

The present disclosure is made in light of the following clauses:
Example Clause A, a computer-implemented method for deploying a robotic security escort to escort a guest of an enterprise within an enterprise facility, comprising: receiving confirmation data indicating that the guest has arrived at a check-in location of the enterprise facility; receiving destination data indicating a destination location, within the enterprise facility, to which the guest is to be escorted by the robotic security escort; determining a security authorization level that is assigned to the guest in association with the enterprise facility; determining, based on the security authorization level that is assigned to the guest in association with the enterprise facility, a route to travel within the enterprise facility from the check-in location to the destination location; and causing the robotic security escort to travel along the route to escort the guest from the check-in location to the destination location.
Example Clause B, the computer-implemented method of Example Clause A, further comprising: receiving area restriction data indicating a security access level that is assigned to a predefined area of the enterprise facility, wherein the route to travel within the enterprise facility from the check-in location to the destination location is further determined based on the area restriction data.
Example Clause C, the computers-implemented method of Example Clause B, wherein the route passes through the predefined area based at least in part on the security authorization level permitting the guest to access the predefined area.
Example Clause D, the computer-implemented method of Example Clause B, wherein the route avoids the predefined area based at least in part on the security authorization level restricting the guest from accessing the predefined area.
Example Clause E, the computer-implemented method of any one of Example Clauses A through D, further comprising: receiving guest input data indicating at least one location-of-interest associated with the guest; and causing the robotic security escort to deviate from the route to escort the guest to the at least one location-of-interest.
Example Clause F, the computer-implemented method of any one of Example Clauses A through E, further comprising: monitoring a physical location of the guest with respect to the route while escorting the guest from the check-in location to the destination location; and performing one or more security measures in response to the physical location of the guest deviating from the route.
Example Clause G, the computer-implemented method of any one of Example Clauses A through F, wherein the one or more security measures includes at least one of: causing the robotic security escort to communicate directive instructions to instruct the guest to return to the route, or activating an alarm that indicates that the guest has deviated from the route.
Example Clause H, the computer-implemented method of any one of Example Clauses A through G, wherein the robotic security escort exposes an indication of the security authorization level that is assigned to the guest in association with the enterprise facility while escorting the guest from the check-in location to the destination location.
Example Clause I, a system, comprising: one or more processors; and a memory in communication with the one or more processors, the memory having computer-readable instructions stored thereupon that, when executed by the one or more processors, cause the one or more processors to: receive confirmation data indicating that a guest has arrived at a first location of an enterprise facility, wherein the confirmation data indicates an identity of the guest; receive destination data indicating a second location, within the enterprise facility, to which the guest is to be escorted by a robotic security escort; receive security authorization data associated with the identity of the guest; based on the security authorization data, determine whether the guest is permitted to access a predefined area of the enterprise facility to select between: causing the robotic security escort to escort the guest from the first location to the second location along a first route that passes through the predefined area based on the guest being permitted to access the predefined area; and causing the robotic security escort to escort the guest from the first location to the second location along a second route that avoids the predefined area based on the guest being restricted from accessing the predefined area.
Example Clause J, the system of Example Clause I, wherein the computer-readable instructions are further executable to monitor a physical location of the guest with respect to the route while escorting the guest from the check-in location to the destination location.
Example Clause K, the system of any one of Example Clauses I through J, wherein the security authorization data restricts the guest from accessing the predefined area of the enterprise facility, and wherein the computer-readable instructions are further executable to activate an alarm in response to the physical location of the guest deviating from the second route in a direction towards the predefined area.
Example Clause L, the system of any one of Example Clauses I through K, wherein the security authorization data restricts the guest from accessing the predefined area of the enterprise facility, and wherein the computer-readable instructions are further executable to cause a door to the predefined area to become locked in response to the physical location of the guest deviating from the second route in a direction towards the predefined area.
Example Clause M, the system of any one of Example Clauses I through L, wherein the computer-readable instructions further cause the one or more processors to: analyze calendar data to identify a meeting that the guest is scheduled to attend at the enterprise facility; and cause the robotic security escort to escort the guest from the first location to the second location based on the second location being associated with the meeting within the calendar data.
Example Clause N, the system of any one of Example Clauses I through M, wherein the computer-readable instructions further cause the one or more processors to: receive location data that is indicative of a current geolocation of the guest; and deploy the robotic security escort to the current geolocation of the guest to perform one or more check-in procedures.
Example Clause O, the system of any one of Example Clauses I through N, wherein the robotic security escort exposes a visual indication of a security authorization level that is assigned to the guest in association with the enterprise facility while escorting the guest from the first location to the second location.
Example Clause P, the system of any one of Example Clauses I through O, wherein the robotic security escort is configured with at least one biometric sensor to confirm the identity of the guest.
Example Clause Q, a computer-implemented method, comprising: receiving confirmation data indicating that the guest has arrived at a first location of an enterprise facility; receiving destination data indicating a second location to guide the guest within the enterprise facility; determining a security authorization level that is assigned to the guest in association with the enterprise facility; determining, based on the security authorization level that is assigned to the guest in association with the enterprise facility, a route for the guest to travel from the first location to the second location; monitoring a physical location of the guest within the enterprise facility; and modulating one or more signals within the enterprise facility based on the physical location of the guest to guide the guest along the route from the first location to the second location.
Example Clause R, the computer-implemented method of Example Clause Q, wherein the one or more signals includes one or more lights that are physically installed within the enterprise facility.
Example Clause S, the computer-implemented method of Example Clause R, further comprising causing one or more doors of the enterprise facility to become locked in response to the physical location of the guest deviating from the route.
Example Clause T, the computer-implemented method of Example Clause S, further comprising causing activating an alarm in response to the physical location of the guest deviating from the route.

Subject matter of any of the example clauses above may be embodied in a computer program (product) comprising instructions that, when the program is executed by a computer, cause the computer to carry out the described steps. Similarly, subject matter of any of the clauses above may be embodied in a computer-readable medium or data carrier.

### CONCLUSION

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A computer-implemented method for deploying a robotic security escort to escort a guest of an enterprise within an enterprise facility, comprising:
receiving confirmation data indicating that the guest has arrived at a check-in location of the enterprise facility;
receiving destination data indicating a destination location, within the enterprise facility, to which the guest is to be escorted by the robotic security escort;
determining a security authorization level that is assigned to the guest in association with the enterprise facility;
determining, based on the security authorization level that is assigned to the guest in association with the enterprise facility, a route to travel within the enterprise facility from the check-in location to the destination location;
causing the robotic security escort to travel along the route to escort the guest from the check-in location to the destination location.

2. The computer-implemented method of claim 1, further comprising:
receiving area restriction data indicating a security access level that is assigned to a predefined area of the enterprise facility, wherein the route to travel within the enterprise facility from the check-in location to the destination location is further determined based on the area restriction data.

3. The computer-implemented method of claim 2, wherein:
the route passes through the predefined area based at least in part on the security authorization level permitting the guest to access the predefined area; or
the route avoids the predefined area based at least in part on the security authorization level restricting the guest from accessing the predefined area.

4. The computer-implemented method of any one of the preceding claims, further comprising:
receiving guest input data indicating at least one location-of-interest associated with the guest; and
causing the robotic security escort to deviate from the route to escort the guest to the at least one location-of-interest.

5. The computer-implemented method of any one of the preceding claims, further comprising:
monitoring a physical location of the guest with respect to the route while escorting the guest from the check-in location to the destination location; and
performing one or more security measures in response to the physical location of the guest deviating from the route;
wherein the one or more security measures may include at least one of:
causing the robotic security escort to communicate directive instructions to instruct the guest to return to the route, or
activating an alarm that indicates that the guest has deviated from the route.

6. The computer-implemented method of any one of the preceding claims, wherein the robotic security escort exposes an indication of the security authorization level that is assigned to the guest in association with the enterprise facility while escorting the guest from the check-in location to the destination location.

7. A system, comprising:
one or more processors; and
a memory in communication with the one or more processors, the memory having computer-readable instructions stored thereupon that, when executed by the one or more processors, cause the one or more processors to:
receive confirmation data indicating that a guest has arrived at a first location of an enterprise facility, wherein the confirmation data indicates an identity of the guest;
receive destination data indicating a second location, within the enterprise facility, to which the guest is to be escorted by a robotic security escort;
receive security authorization data associated with the identity of the guest;
based on the security authorization data, determine whether the guest is permitted to access a predefined area of the enterprise facility to select between:
causing the robotic security escort to escort the guest from the first location to the second location along a first route that passes through the predefined area based on the guest being permitted to access the predefined area; and
causing the robotic security escort to escort the guest from the first location to the second location along a second route that avoids the predefined area based on the guest being restricted from accessing the predefined area.

8. The system of claim 7, wherein the computer-readable instructions are further executable to monitor a physical location of the guest with respect to the route while escorting the guest from the check-in location to the destination location.

9. The system of claim 8, wherein the security authorization data restricts the guest from accessing the predefined area of the enterprise facility, and
wherein the computer-readable instructions are further executable to:
activate an alarm in response to the physical location of the guest deviating from the second route in a direction towards the predefined area; and/or
cause a door to the predefined area to become locked in response to the physical location of the guest deviating from the second route in a direction towards the predefined area.

10. The system of any one of claims 7 to 9, wherein the computer-readable instructions further cause the one or more processors to:
analyze calendar data to identify a meeting that the guest is scheduled to attend at the enterprise facility; and
cause the robotic security escort to escort the guest from the first location to the second location based on the second location being associated with the meeting within the calendar data.

11. The system of any one of claims 7 to 10, wherein the computer-readable instructions further cause the one or more processors to:
receive location data that is indicative of a current geolocation of the guest; and
deploy the robotic security escort to the current geolocation of the guest to perform one or more check-in procedures.

12. The system of any one of claims 7 to 11, wherein the robotic security escort exposes a visual indication of a security authorization level that is assigned to the guest in association with the enterprise facility while escorting the guest from the first location to the second location;
wherein the robotic security escort may be configured with at least one biometric sensor to confirm the identity of the guest.

13. A computer-implemented method, comprising:
receiving confirmation data indicating that the guest has arrived at a first location of an enterprise facility;
receiving destination data indicating a second location to guide the guest within the enterprise facility;
determining a security authorization level that is assigned to the guest in association with the enterprise facility;
determining, based on the security authorization level that is assigned to the guest in association with the enterprise facility, a route for the guest to travel from the first location to the second location;
monitoring a physical location of the guest within the enterprise facility; and
modulating one or more signals within the enterprise facility based on the physical location of the guest to guide the guest along the route from the first location to the second location.

14. The computer-implemented method of claim 13, wherein the one or more signals includes one or more lights that are physically installed within the enterprise facility.

15. The computer-implemented method of claim 13 or 14, further comprising
causing one or more doors of the enterprise facility to become locked in response to the physical location of the guest deviating from the route; and/or
activating an alarm in response to the physical location of the guest deviating from the route.
